# EUROPÄISCHE PATENTSCHRIFT

(11) **EP 2 012 588 B1**
(45) Veröffentlichungstag und Bekanntmachung des Hinweises auf die Patenterteilung: **27.04.2011**
(21) Anmeldenummer: 07722963.1
(22) Anmeldetag: 28.02.2007
(51) Int. Cl.: A01N 57/20, A01P 13/00, A01N 25/04, A01N 43/68, A01N 43/70

(54) **WÄSSRIGE SUSPENSIONSKONZENTRATE**
AQUEOUS SUSPENSION CONCENTRATE
CONCENTRES DE SUSPENSIONS AQUEUSES

(30) Priorität: 15.03.2006 EP 06005242
(43) Veröffentlichungstag der Anmeldung: 14.01.2009
(73) Patentinhaber: Bayer CropScience AG, 40789 Monheim (DE)
(72) Erfinder: FRISCH, Gerhard, 61273 Wehrheim (DE); EBERSOLD, Ulrike, 65795 Hattersheim (DE)
(86) Internationale Anmeldenummer: PCT/EP2007/001710
(87) Internationale Veröffentlichungsnummer: WO 2007/104429

(56) Entgegenhaltungen:
- EP-A- 0 110 174
- EP-A- 0 297 305
- EP-A- 0 357 553
- EP-A- 0 379 852
- EP-A- 0 499 798
- EP-A- 0 702 896
- WO-A-00/16627
- WO-A-97/08156
- WO-A-03/022049
- DE-A1- 3 210 869

## Beschreibung

Die Erfindung betrifft das technische Gebiet der Formulierungen von Wirkstoffen für die Anwendung im Pflanzenschutz. Speziell betrifft die Erfindung Formulierungen für Wirkstoff-Kömbinationen, die unter anderem Wirkstoffe mit polaren Gruppen (wie Aminogruppen und zugleich aromatischen und heteroaromatischen Resten) und breitwirksame, nicht-selektive Wirkstoffe enthalten.

Pflanzenschutzmittel können prinzipiell auf verschiedene Arten formuliert werden, wobei die Eigenschaften der Wirkstoffe und Art der Formulierung Probleme hinsichtlich der Herstellbarkeit, Stabilität, Anwendbarkeit und Wirksamkeit der Formulierungen aufwerfen können. Dies gilt insbesondere für Wirkstoff-Kombinationen, die sich aus unterschiedlichen Wirkstoffgruppen zusammensetzen können. Zusätzlich sind bestimmte Formulierungstypen aus ökonomischen und ökologischen Gründen vorteilhafter als andere und daher vorzuziehen. Aus EP-A-0357553 sind bereits wässrige Suspensionskonzentrate bekannt, Welche für Wirkstoffkombinationen von Glyphosate und herkömmlichen Triazinderivaten wie Atrazin oder Simazin geeignet sind und bestimmte anionische oder kationische Tenside als Formulierungsbestandteile enthalten.

Eine der zu formulierenden Wirkstoffgruppen besteht aus zahlreichen Verbindungen aus einer neueren Gruppe von 2,4-Diamino-s-triazinen, welche an einer Aminogruppe mit einer (Hetero)aryl(hetero)alkylgruppe N-substituiert sind. Diese 2,4-Diamino-s-triazine sind als herbizide Wirkstoffe für die Bekämpfung von unerwünschtem Pflanzenwachstum, beispielsweise von Schadpflanzen in Pflanzenkulturen, Plantagen oder auf Nichtkulturland bekannt; siehe beispielsweise WO-A-97/08156, WO-A-97/29095, WO-A-97/31904, WO-A-98/15536, WO-A-98/15537, WO-A-98/15538, WO-A-98/15539 sowie auch DE-A-19828519, WO-A-98/34925, WO-A-98/42684, WO-A-99/18100, WO-A-99/19309, WO-A-99/37627, WO-A-99/65882, WO-A-00/16627, WO-A-00/69854, WO-A-03/070710, EP-A-1484324, WO-A-04/069814, und die in den Druckschriften zitierte Literatur.

Die Verbindungen unterscheiden sich zunächst von den weithin bekannten 2,4-Diaminotriazinen älteren Typs, wie Atrazin oder Simazin, welche N,N'-dialkylsubstituiert sind, in den an einer Aminogruppe über (cyclo)aliphatische Brücken verbundenen Aryl- oder Heteroarylgruppen, die hier zusammen mit der Brücke abgekürzt als (Hetero)aryl(hetero)alkylgruppen bezeichnet werden. Sie umfassen Arylalkyl- und Heteroarylalkylgruppen, welche in der Alkylbrücke noch Heteroatome aus der Gruppe O, S und N enthalten können, wobei die jeweilige Alkylbrücke auch mit der Brücke oder dem (Hetero)arylrest cyclisch verbrückt sein und damit auch mit dem (Hetero)Aromaten bicyclische Reste bilden kann. Wegen der andersartigen chemischen Struktur weisen diese 2,4-Diamino-s-triazine andere biologische und physikochemische Merkmale auf als die genannten herkömmlichen 2,4-Diamino-s-triazine.

Bei der anderen zu formulierenden Wirkstoffgruppe handelt es sich um bekannte breitwirksame, nicht-selektive Herbizide aus der Gruppe phosphatgruppenhaltiger Derivate der Aminosäuren Glycin oder Homoalanin (Glycin/Homoalanin), wie beispielsweise die Verbindungen Glufosinate, Bialaphos, Glyphosate und Sulfosate.

Gründe für die Kombination von verschiedenen Wirkstoffgruppen bei der Anwendung sind vielfältig, wie beispielsweise Abdeckung von eventuell vorhandenen Wirkungslücken gegen spezielle Schadpflanzenarten; allgemeine Verlängerung der Wirkungsdauer einer Herbizidanwendung; Brechung von reduzierter Schadpflanzenempfindlichkeit (Herbizidtoleranz bzw. -resistenz), die bei längerer, einseitiger Anwendung bestimmter Herbizide, meist geographisch begrenzt, auftreten können; Senkung der für die Anwendung notwendigen Aufwandmengen, wodurch nicht nur die für die Applikation erforderliche Wirkstoffmenge sondern auch die Menge an Formulierungshilfsmitteln reduziert wird.

Erwünscht sind daher Kombinationen von Wirkstoffen mit hoher Formulierungsstabilität und möglichst synergistisch verstärkter Wirkung. So bewirken synergistische Effekte eine Reduktion der Aufwandmengen der Einzelwirkstoffe, eine höhere Wirkungsstärke gegenüber derselben Schadpflanzenart bei gleicher Aufwandmenge, die Kontrolle bislang nicht erfasster Arten (Wirkungslücken), eine Ausdehnung des Anwendungszeitraums und/oder eine Reduzierung der Anzahl notwendiger Einzelanwendungen (Wirkungsdauer) und - als Resultat für den Anwender - ökonomisch und ökologisch vorteilhaftere Unkrautbekämpfungssysteme.

Häufig sind hierfür jedoch bestimmte wirksame Mengenverhältnisse zwischen den einzelnen Wirkstoffgruppen einzuhalten, was in idealer Weise erst durch spezielle Wirkstoff-Kombinations-Formulierungen (synonym: Mischungs-Formulierungen, Co-Formulierungen) gewährleistet werden kann. Allerdings treten bei der kombinierten Anwendung mehrerer Wirkstoffe bzw. Wirkstoffgruppen nicht selten Phänomene der physikalischen und biologischen Unverträglichkeit auf, z. B. mangelnde Stabilität innerhalb der Formulierung durch Zersetzung einzelner oder aller Wirkstoffe, aber auch antagonistische Effekte der Wirkstoffe nach der Anwendung, welche die biologische Wirksamkeit senken bzw. ganz aufheben können. :

Es bestand nun die Aufgabe spezielle Wirkstoff-Kombinations-Formulierungen (synonym: Mischungs-Formulierungen, Co-Formulierungen) insbesondere für Wirkstoff-Kombinationen aus der Gruppe der genannten neuartigen 2,4-Diamino-s-triazine und der Gruppe der phosphatgruppenhaltigen Derivate der Aminosäuren Glycin/Homoalanin zur Verfügung zu stellen, die vorteilhafte Eigenschaften, wie eine bessere biologische Wirkung in Verbindung mit einer hohen Stabilität der Mischungs-Komponenten in der Formulierung aufweisen.

Überraschenderweise wurde gefunden, dass diese Aufgabe durch die wässrigen Suspensionskonzentrate der vorliegenden Erfindung gelöst wird.

Gegenstand der Erfindung ist ein wässriges Suspensionskonzentrat, enthaltend
(1) einen oder mehrere Wirkstoffe aus der Gruppe herbizidwirksamer 2,4-Diamino-s-triazine, welche an einer Aminogruppe mit einer (Hetero)aryl(hetero)alkylgruppe N-substituiert sind,
(2) einen oder mehrere Wirkstoffe aus der Gruppe herbizidwirksamer phosphatgruppenhaltiger Derivate der Aminosäuren Glycin/Homoalanin,
(3) ein oder mehrere Tenside auf Basis nicht salzartiger, substituierter Phenolether,
(4) einen oder mehrere Verdicker, vorzugsweise Verdicker auf Aluminiumsilikatbasis.

Darüber hinaus kann das erfindungsgemäße wässrige Suspensionskonzentrat weitere Komponenten-enthalten, beispielsweise:
(5) weitere Formulierungshilfsmittel, und
(6) weitere, von Komponente (3) verschiedene Tenside.

Formulierungen auf Wasserbasis haben in der Regel den Vorteil, dass sie einen geringen Anteil oder keinen Anteil an organischen Lösungsmitteln benötigen.

Wässrige Suspensionskonzentrate zur Formulierung von Wirkstoffen, aus den Bereichen Agrochemie, Pharmazie, Veterinärmedizin sowie Farben und Lacke sind bekannt. So werden beispielsweise in EP-A-0110174 wässrige Suspensionskonzentrate von Pflanzenschutzmitteln beschrieben, ebenso wie höher konzentrierte wässrige Suspensionskonzentrate wie z.B. von Schwefel in EP-A-0220655 und Metamitron in EP-A-0620971. Hier wird eine Mischung aus Formaldehydkondensationsprodukten bzw. Ligninsulfonaten und Netzmittel bevorzugt benutzt.

Unter dem Begriff "Wässrige Suspensionskonzentrate" werden Suspensionskonzentrate auf Basis von Wasser verstanden. Der Anteil an Wasser in den erfindungsgemäßen Suspensionskonzentraten kann in einem breiten Bereich variieren und beträgt vorzugsweise 25 bis 98 Gew.-%, insbesondere 35 bis 85 Gew.-%; dabei bezieht sich die Angabe "Gew.-%" (Gewichtsprozent) hier und in der gesamten Beschreibung, wenn nicht anders definiert, auf das relative Gewicht der jeweiligen Komponente bezogen auf das Gesamtgewicht der Formulierung. Geeignete Wirkstoffe vom Typ der genannten neuartigen 2,4-Diamino-s-triazine (Komponente 1) sind die aus den bereits zitierten Patentveröffentlichungen bekannten Wirkstoffe, insbesondere 2,4-Diamino-6-(halo)(cyclo)alkyl-s-triazinverbindungen, welche an einer Aminogruppe mit Arylalkyl-, Heteroarylalkyl-, Aryloxyalkyl-, Heteroaryloxyalkyl-, Arylalkoxyalkyl-, Heteroarylalkoxyalkyl-Resten oder bicyclischen Resten, vorzugsweise dabei bicyclischen Resten, worin der der Bindungsstelle ferner stehende Cyclus aromatisch oder heteroaromatisch ist, substituiert sind.

Beispiele für geeignete 2,4-Diamino-s-triazine aus der genannten Gruppe sind Verbindungen der nachstehend genannten Formeln (I), (II), (III) und (IV), d.h.
1. Verbindungen der Formel (I) und deren Salze, 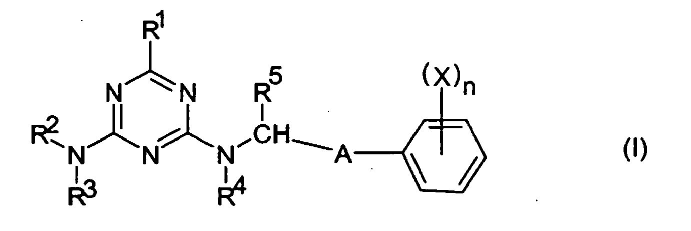 worin
   - R¹: (C₁-C₆)Alkyl, das unsubstituiert oder durch einen oder mehrere Reste aus der Gruppe Halogen, Cyano, Nitro, Thiocyanato, (C₁-C₄)Alkoxy, (C₁-C₄)Alkylthio, (C₁- C₄)Alkylsulfinyl, (C₁-C₄)Alkylsulfonyl, (C₂-C₄)Alkenyl, (C₂-C₄)Alkinyl, Phenyl, das unsubstituiert oder substituiert ist, und Heterocyclyl mit 3 bis 6 Ringatomen und 1 bis 3 Heteroringatomen aus der Gruppe N, O und S, wobei der Ring unsubstituiert oder substituiert ist, substituiert ist,
   - R² und R³: jeweils unabhängig voneinander Wasserstoff, Amino oder Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen oder einen Heterocyclylrest, Heterocyclyloxyrest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest oder
   R² und R³ gemeinsam mit dem Stickstoffatom der Gruppe NR²R³ einen heterocyclischen Rest mit 3 bis 6 Ringatomen und 1 bis 4 Heteroringatomen, wobei neben dem N-Atom die gegebenenfalls weiteren Heteroringatome aus der Gruppe N, O und S ausgewählt sind und der Rest unsubstituiert oder substituiert ist,
   - R⁴: Wasserstoff, Amino, Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen, vorzugsweise mit 1 bis 6 C-Atomen, oder einen Heterocyclylrest, Heterocyclyloxyrest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest,
   - R⁵: Wasserstoff, Halogen, Nitro, Cyano, Thiocyanato oder einen Rest der Formel -B¹-Y¹, wobei B¹ und Y¹ wie unten definiert sind,
   - A: Alkylen mit 1 bis 5 linear verknüpften C-Atomen oder Alkenylen oder Alkinylen mit jeweils 2 bis 5 linear verknüpften C-Atomen, wobei jeder der drei letztgenannten Diradikale unsubstituiert oder durch einen oder mehrere Reste aus der Gruppe Halogen, Nitro, Cyano, Thiocyanato und einen Rest der Formel -B²-Y² substituiert ist,
   - (X)ₙ: n Substituenten X und dabei X jeweils unabhängig voneinander Halogen, (C₁-C₆)Alkyl, (C₂-C₆)Alkenyl, (C₂-C₆)Alkinyl, (C₁-C₆)Alkoxy, (C₂-C₆)Alkenyloxy, (C₂-C₆)Alkinyloxy, [(C₁-C₄)Alkyl]-carbonyl, [(C₁-C₄)Alkoxy]-carbonyl oder [(C₁-C₄)Alkylthio]-carbonyl, wobei die kohlenwasserstoffhaltigen Teile in den letztgenannten 9 Resten unsubstituiert oder substituiert sind, oder einen Rest der Formel -B°-R°, wobei B° wie unten definiert und R° einen aromatischen, gesättigten oder teilgesättigten carbocyclischen oder heterocyclischen Rest bedeutet, wobei der cyclische Rest substituiert oder unsubstituiert ist, oder zwei benachbarte Reste X gemeinsam einen ankondensierten Cyclus mit 4 bis 6 Ringatomen, der carbocyclisch ist oder Heteroringatome aus der Gruppe O, S und N enthält und der unsubstituiert oder durch einen oder mehrere Reste aus der Gruppe Halogen, (C₁-C₄)Alkyl und Oxo substituiert ist,
   - n: 0, 1, 2, 3, 4 oder 5,
   - B°, B¹, B²: jeweils unabhängig voneinander eine direkte Bindung oder eine divalente Gruppe der Formel -O-, -S(O)ₚ-, -S(O)ₚ-O-, -O-S(O)ₚ-, -CO-, -O-CO-, -CO-O-, -NR'-, -O-NR'-, -NR'-O-, -NR'-CO-, -CO-NR'-, wobei p = 0, 1 oder 2 ist und R' Wasserstoff, Alkyl mit 1 bis 6 C-Atomen, Phenyl, Benzyl, Cycloalkyl mit 3 bis 6 C-Atomen oder Alkanoyl mit 1 bis 6 C-Atomen ist,
   - Y¹, Y²: jeweils unabhängig voneinander H oder einen acyclischen Kohlenwasserstoffrest beispielsweise jeweils mit 1 bis 20 C-Atomen oder einen cyclischen Kohlenwasserstoffrest mit 3 bis 8 C-Atomen oder einen heterocyclischen Rest mit 3 bis 9 Ringatomen und 1 bis 3 Heteroringatomen aus der Gruppe N, O und S, wobei jeder der drei letztgenannten Reste unsubstituiert oder substituiert ist,
   bedeuten;
2. Verbindungen der Formel (II) oder deren Salze, 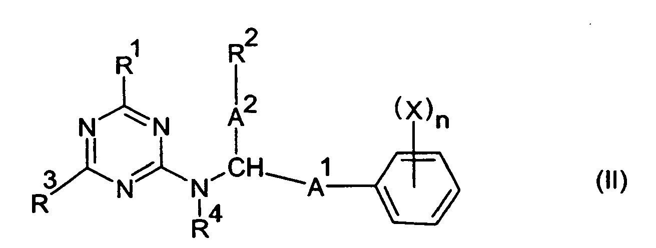 worin
   - R¹: Aryl, das unsubstituiert oder substituiert ist, oder (C₃-C₉)Cycloalkyl, das unsubstituiert oder substituiert ist, oder Heterocyclyl, das substituiert oder unsubstituiert ist, oder (C₁-C₆)Alkyl, (C₂-C₆)Alkenyl oder (C₂-C₆)Alkinyl,
   wobei jeder der letztgenannten 3 Reste unsubstituiert oder durch einen oder mehrere Reste aus der Gruppe Halogen, Hydroxy, Cyano, Nitro, Thiocyanato, (C₁-C₄)Alkoxy, (C₁-C₄)Haloalkoxy, (C₂-C₄)Alkenyloxy, (C₂-C₄)Haloalkenyloxy, (C₁-C₄)Alkylthio, (C₁-C₄)Alkylsulfinyl, (C₁-C₄)Alkylsulfonyl, (C₁- C₄)Haloalkylsulfinyl, (C₁-C₄)Haloalkylsulfonyl und (C₃-C₉)Cycloalkyl, das unsubstituiert oder substituiert ist, und Phenyl, das unsubstituiert oder substituiert ist, und Heterocyclyl, das unsubstituiert oder substituiert ist, und Reste der Formeln R'-C(=Z')-, R'-C(=Z')-Z-, R'-Z-C(=Z')-, R'R"N-C(=Z')-, R'-Z-C(=Z')-O-, R'R"N-C(=Z')-Z-, R'-C(=Z')-NR"- und R'R"N-C(=Z')-NR"'-, worin R', R" und R"', jeweils unabhängig voneinander (C₁-C₆)Alkyl, Aryl, Aryl-(C₁-C₆)alkyl, (C₃-C₉)Cycloalkyl oder (C₃- C₉)Cycloalkyl-(C₁-C₆)alkyl, wobei jeder der 5 letztgenannten Reste unsubstituiert oder substituiert ist, bedeuten und worin Z und Z' unabhängig voneinander jeweils ein Sauerstoff- oder Schwefelatom sind, substituiert ist,
   - R²: (C₃-C₉)Cycloalkyl, das unsubstituiert oder substituiert ist, (C₄-C₉)Cycloalkenyl, das unsubstituiert oder substituiert ist, Heterocyclyl, das unsubstituiert oder substituiert ist, oder Phenyl, das unsubstituiert oder substituiert ist, oder
   - R³: einen Rest der Formel -N(B¹-D¹)(B²-D²) oder -NR¹-N(B¹-D¹)(B²-D²), worin jeweils B¹, B², D¹ und D² wie unten definiert sind und R' Wasserstoff, (C₁- C₆)Alkyl oder [(C₁-C₄)Alkyl]-carbonyl bedeutet,
   - R⁴: einen Rest der Formel -B³-D³, wobei B³ und D³ wie unten definiert sind,
   - A¹: geradkettiges Alkylen mit 1 bis 5 C-Atomen oder geradkettiges Alkenylen oder Alkinylen mit jeweils 2 bis 5 C-Atomen, wobei jeder der drei letztgenannten Diradikale unsubstituiert oder durch einen oder mehrere Reste aus der Gruppe Halogen, Nitro, Cyano, Thiocyanato und Reste der Formel -B⁴-D⁴ substituiert ist, wobei B⁴ und D⁴ wie unten definiert sind,
   - A²: eine direkte Bindung oder geradkettiges Alkylen mit 1 bis 4 C-Atomen oder geradkettiges Alkenylen oder Alkinylen mit jeweils 2 bis 5 C-Atomen, wobei jeder der drei letztgenannten Diradikale unsubstituiert oder durch einen oder mehrere Reste aus der Gruppe Halogen, Nitro, Cyano, Thiocyanato und Reste der Formel -B⁵-D⁵ substituiert ist, oder einen divalenten Rest der Formel V¹, V², V³, V⁴ oder V⁵,

   -CR⁶R⁷-W*-CR⁸R⁹- (V¹)

   -CR¹⁰R¹¹-W*-CR¹²R¹³-CR¹⁴R¹⁵- (V²)

   -CR¹⁶R¹⁷-CR¹⁸R¹⁹-W*-CR²⁰R²¹- (V³)

   -CR²²R²³-CR²⁴R²⁵-W*- (V⁴)

   -CR²⁶R²⁷-W*- (V⁵)

   wobei jeder der Reste R⁶ bis R²⁷ jeweils unabhängig voneinander Wasserstoff, Halogen, Nitro, Cyano, Thiocyanato oder einen Rest der Formel -B⁶-D⁶ ist,
   W* jeweils ein Sauerstoffatom, ein Schwefelatom oder eine Gruppe der Formel N(B⁷-D⁷) ist und
   B⁵, B⁶, B⁷, D⁵, D⁶ und D⁷ wie unten definiert sind,
   - B¹, B², B³ und B⁷: jeweils unabhängig voneinander eine direkte Bindung oder eine divalente Gruppe der Formeln -C(=Z*)-, -C(=Z*)-Z**-, -C(=Z*)-NH- oder -C(=Z*)-NR*-, wobei Z* = ein Sauerstoff- oder Schwefelatom, Z** = ein Sauerstoff- oder Schwefelatom und R* = (C₁-C₆)Alkyl, Aryl, Aryl-(C₁-C₆)alkyl, (C₃-C₉)Cycloalkyl oder (C₃-C₉)Cycloalkyl-(C₁-C₆)alkyl, wobei jeder der 5 letztgenannten Reste unsubstituiert oder substituiert ist,
   - B⁴, B⁵ und B⁶: jeweils unabhängig voneinander eine direkte Bindung oder eine divalente Gruppe der Formeln -O-, -S(O)ₚ-, -S(O)ₚ-O-, -O-S(O)ₚ-, -CO-, -O-CO-, -CO-O-, -S-CO-, -CO-S-, -S-CS-, -CS-S-, -O-CO-O-, -NR°-, -O-NR°-, -NR°-O-, -NR°-CO-, -CO-NR°-, -O-CO-NR°- oder -NR°-CO-O-, wobei p die ganze Zahl 0, 1 oder 2 ist und R° Wasserstoff, (C₁-C₆)Alkyl, Aryl, Aryl-(C₁-C₆)alkyl, (C₃-C₉)Cycloalkyl oder (C₃-C₉)Cycloalkyl-(C₁-C₆)alkyl, wobei jeder der 5 letztgenannten Reste unsubstituiert oder substituiert ist, bedeutet,
   - D¹, D², D³, D⁴, D⁵, D⁶ und D⁷: jeweils unabhängig voneinander Wasserstoff, (C₁- C₆)Alkyl, Aryl, Aryl-(C₁-C₆)alkyl, (C₃-C₉)Cycloalkyl oder (C₃-C₉)Cycloalkyl-(C₁- C₆)alkyl, wobei jeder der 5 letztgenannten Reste unsubstituiert oder substituiert ist, oder jeweils zwei Reste D⁵ von an einem C-Atom gebundenen zwei Gruppen -B⁵-D⁵ miteinander verbunden sind und eine Alkylengruppe mit 2 bis 4 C-Atomen ergeben, die unsubstituiert oder durch einen oder mehrere Reste aus der Gruppe (C₁-C₄)alkyl und (C₁-C₄)alkoxy substituiert ist,
   - (X)ₙ: n Substituenten X und dabei X jeweils unabhängig voneinander Halogen, Hydroxy, Amino, Nitro, Formyl, Carboxy, Cyano, Thiocyanato, Aminocarbonyl oder (C₁-C₆)Alkyl, (C₁-C₆)Alkoxy, (C₁-C₆)Alkylthio, Mono(C₁-C₆)alkylamino, Di(C₁-C₄)alkylamino, (C₂-C₆)Alkenyl, (C₂-C₆)Alkinyl, [(C₁-C₆)Alkyllcarbonyl, [(C₁-C₆)Alkoxy]carbonyl, Mono(C₁-C₆)alkylamino-carbonyl Di(C₁-C₄)alkylamino-carbonyl, N-(C₁-C₆)Alkanoyl-amino oder N- (C₁-C₄)Alkanoyl-N-(C₁-C₄)alkyl-amino, wobei jeder der letztgenannten 13 Reste unsubstituiert oder substituiert ist, vorzugsweise unsubstituiert oder durch einen oder mehrere Reste aus der Gruppe Halogen, Hydroxy, Amino, Nitro, Formyl, Carboxy, Cyano, Thiocyanato, (C₁-C₄)Alkoxy, (C₁-C₄)Haloalkoxy, (C₁-C₄)Alkylthio, (C₁-C₄)Haloalkylthio, Mono(C₁-C₄)alkylamino, Di(C₁-C₄)alkylamino, (C₃-C₉)Cycloalkyl, (C₃-C₉)Cycloalkyl-amino, [(C₁-C₄)Alkyl]carbonyl, [(C₁-C₄)Alkoxy]carbonyl, Aminocarbonyl, Mono(C₁-C₄)alkylamino-carbonyl, Di(C₁-C₄)alkylamino- carbonyl, Phenyl, Phenoxy, Phenylthio, Phenylcarbonyl, Heterocyclyl, Heterocyclyloxy, Heterocyclylthio und Heterocyclylamino, wobei jeder der letztgenannten 8 Reste unsubstituiert ist oder einen oder mehrere Substituenten aus der Gruppe Halogen, Nitro, Cyano, (C₁-C₄)Alkyl, (C₁-C₄)Alkoxy, (C₁-C₄)Alkylthio, (C₁-C₄)Haloalkyl, (C₁-C₄)Haloalkoxy, Formyl, (C₁-C₄)Alkyl-carbony und (C₁-C₄)Alkoxy-carbonyl aufweist, substituiert ist, oder (C₃-C₉)Cycloalkyl, (C₃-C₉)Cycloalkoxy, (C₃-C₉)Cycloalkylamino, Phenyl, Phenoxy, Phenylthio, Phenylcarbonyl, Heterocyclyl, Heterocyclyloxy, Heterocyclylthio oder Heterocyclylamino, wobei jeder der letztgenannten 11 Reste unsubstituiert oder substituiert ist, oder zwei benachbarte Reste X gemeinsam einen ankondensierten Cyclus mit 4 bis 6 Ringatomen, der carbocyclisch ist oder Heteroringatome aus der Gruppe O, S und N enthält und der unsubstituiert oder durch einen oder mehrere Reste aus der Gruppe Halogen, (C₁-C₄)Alkyl und Oxo substituiert ist,
   - n: 0, 1, 3, 4 oder 5 und
   - "Heterocyclyl": in den vorstehend genannten Resten unabhängig voneinander jeweils einen heterocyclischen Rest mit 3 bis 7 Ringatomen und 1 bis 3 Heteroatomen aus der Gruppe N, O und S
   bedeuten, wobei vorzugsweise
   a) die Gesamtsumme der C-Atome in den Resten A¹ und A²-R² mindestens 6 C-Atome beträgt oder
   b) die Gesamtsumme der C-Atome in den Resten A¹ und A²-R² 5 C-Atome beträgt und A¹ = eine Gruppe der Formel -CH₂- oder -CH₂CH₂- bedeutet sowie R¹ = (C₁-C₄)Alkyl, (C₁-C₄)Haloalkyl, (C₂-C₆)Haloalkenyl oder (C₃-C₉)Cycloalkyl, das unsubstituiert oder substituiert ist, bedeutet;
3. Verbindungen der Formel (III) oder deren Salze, 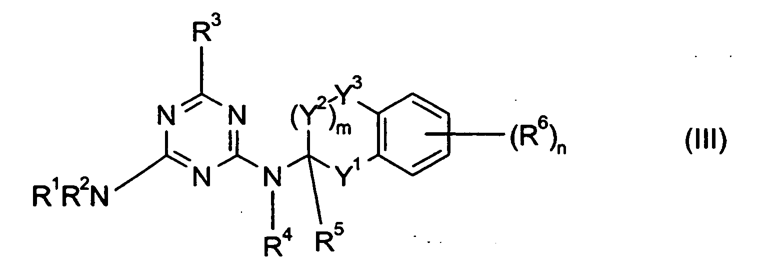 worin
   - R¹ und R²: jeweils unabhängig voneinander Wasserstoff, Amino, Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C-Atomen oder einen Heterocyclylrest, Heterocyclyloxyrest, Heterocyclylthiorest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest oder
   - R¹ und R²: gemeinsam mit dem Stickstoffatom der Gruppe NR¹R² einen heterocyclischen Rest mit 3 bis 6 Ringatomen und 1 bis 4 Heteroringatomen, wobei neben dem N-Atom die gegebenenfalls weiteren Heteroringatome aus der Gruppe N, O und S ausgewählt sind und der Rest unsubstituiert oder substituiert ist,
   - R³: Halogen, Cyano, Thiocyanato, Nitro oder einen Rest der Formel -Z¹-R⁷,
   - R⁴: Wasserstoff, Amino, Alkylamino oder Dialkylamino mit jeweils 1 bis 6 C-Atomen im Alkylrest, einen acyclischen oder cyclischen Kohlenwasserstoffrest oder Kohlenwasserstoffoxyrest mit jeweils 1 bis 10 C- Atomen oder einen Heterocyclylrest, Heterocyclyloxyrest oder Heterocyclylaminorest mit jeweils 3 bis 6 Ringatomen und 1 bis 3 Heteroringatomen aus der Gruppe N, O und S, wobei jeder der fünf letztgenannten Reste unsubstituiert oder substituiert ist, oder einen Acylrest,
   - R⁵: Halogen, Cyano, Thiocyanato, Nitro oder einen Rest der Formel -Z²-R⁸,
   - R⁶,: wenn n=1, oder die Reste R⁶ jeweils unabhängig voneinander, wenn n größer als 1 ist, Halogen, Cyano, Thiocyanato, Nitro oder eine Gruppe der Formel -Z³-R⁹,
   - R⁷, R⁸, R⁹: jeweils unabhängig voneinander
   - Wasserstoff oder
   - einen acyclischen Kohlenwasserstoffrest, wobei in der Kette Kohlenstoffatome durch Heteroatome aus der Gruppe N, O und S substituiert sein können, oder
   - einen cyclischen Kohlenwasserstoffrest oder
   - einen heterocyclischen Rest,
   wobei jeder der letztgenannten 3 Reste unsubstituiert oder substituiert ist,
   - Z¹, Z², Z³: jeweils unabhängig voneinander
   - eine direkte Bindung oder
   - eine divalente Gruppe der Formel -O-, -S(O)ₚ-, -S(O)ₚ-O-, -O-S(O)ₚ-, -CO-, -CS-, -S-CO-, -CO-S-, -O-CS-, -CS-O-, -S-CS-, -CS-S-, -OCO-, -CO-O-, -NR'-, -O-NR'-, -NR'-O-, -NR'-CO- oder -CO-NR'-, wobei p = 0, 1 oder 2 ist und R' Wasserstoff, Alkyl mit 1 bis 6 C-Atomen, Phenyl, Benzyl, Cycloalkyl mit 3 bis 6 C-Atomen oder Alkanoyl mit 1 bis 6 C-Atomen ist,
   - Y¹, Y², Y³: und weitere Gruppen Y², wenn m 2, 3 oder 4 ist, jeweils unabhängig voneinander
   - eine divalente Gruppe der Formel CR^{a}R^{b}, wobei R^{a} und R^{b} gleich oder verschieden sind und jeweils einen Rest aus der Gruppe der für R⁷ bis R⁹ möglichen Reste bedeuten, oder
   - eine divalente Gruppe der Formel -O-, -CO-, -C(=NR*)-, -S(O)q-, -NR*-oder -N(O)-, wobei q = 0, 1 oder 2 ist und R* Wasserstoff oder Alkyl mit 1 bis 4 C-Atomen ist, oder
   - Y¹ oder Y³ eine direkte Bindung,
      wobei zwei Sauerstoffatome der Gruppen Y² und Y³ nicht benachbart sind,
   - m: 1, 2, 3 oder 4,
   - n: 0, 1, 2, 3 oder 4
   bedeuten;
4. Substituierte 2,4-Diamino-1,3,5-triazine der allgemeinen Formel (IV), 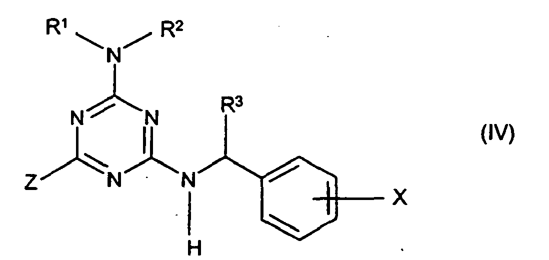 in welcher
   - R¹: für Wasserstoff oder für gegebenenfalls durch Hydroxy, Cyano, Halogen oder C₁-C₄-Alkoxy substituiertes Alkyl mit 1 bis 6 Kohlenstoffatomen steht,
   - R²: für Wasserstoff, für Formyl, für jeweils gegebenenfalls durch Cyano, Halogen oder C₁-C₄-Alkoxy substituiertes Alkyl, Alkylcarbonyl, Alkoxycarbonyl oder Alkylsulfonyl mit jeweils 1 bis 6 Kohlenstoffatomen in den Alkylgruppen, oder für jeweils gegebenenfalls durch Cyano, Halogen-C₁-C₄-alkyl, C₁-C₄-Alkoxy, Halogen-C₁-C₄-alkoxy oder C₁-C₄- Alkoxy-carbonyl substituiertes Phenylcarbonyl, Naphthylcarbonyl, Phenylsulfonyl oder Naphthylsulfonyl steht,
   - R³: für gegebenenfalls durch Cyano, Halogen oder C₁-C₄-Alkoxy substituiertes Alkyl mit 1 bis 6 Kohlenstoffatomen oder für gegebenenfalls durch Cyano, Halogen oder C₁-C₄-Alkyl substituiertes Cycloalkyl mit 3 bis 6 Kohlenstoffatomen steht,
   - X: für einen Substituenten aus folgender Gruppe steht: Hydroxy, Cyano, Nitro, Halogen, jeweils gegebenenfalls durch Hydroxy, Cyano oder Halogen substituiertes Alkyl oder Alkoxy mit jeweils 1 bis 6 Kohlenstoffatomen, jeweils gegebenenfalls durch Halogen substituiertes Alkylcarbonyl, Alkoxycarbonyl, Alkylthio, Alkylsulfinyl oder Alkylsulfonyl mit jeweils 1 bis 6 Kohlenstoffatomen in den Alkylgruppen, jeweils gegebenenfalls durch Hydroxy, Cyano, Nitro, Halogen, C₁-C₄-Alkyl, C₁-C₄-Halogenalkyl, C₁-C₄-Alkoxy oder C₁-C₄- Halogenalkoxy substituiertes Phenyl oder Phenoxy, und
   - Z: für Wasserstoff, Hydroxy, Halogen, für jeweils gegebenenfalls durch Hydroxy, Cyano, Nitro, Halogen, C₁-C₄-Alkoxy, C₁-C₄-Alkylcarbonyl, C₁-C₄-Alkoxy-carbonyl, C₁-C₄-Alkylthio, C₁-C₄-Alkylsulfinyl oder C₁-C₄- Alkylsulfonyl substituiertes Alkyl, Alkoxy, Alkylcarbonyl, Alkoxycarbonyl, Alkylthio, Alkylsulfinyl oder Alkylsulfonyl, mit jeweils 1 bis 6 Kohlenstoffatomen in den Alkylgruppen, für jeweils gegebenenfalls durch Halogen substituiertes Alkenyl oder Alkinyl mit jeweils 2 bis 6 Kohlenstoffatomen oder für gegebenenfalls durch Cyano, Halogen oder C₁-C₄-Alkyl substituiertes Cycloalkyl mit 3 bis 6 Kohlenstoffatomen steht.

Bevorzugt sind die genannten 2,4-Diamino-s-triazine der Formeln (I) bis (V), die in Position 6 am Triazinring mit Resten aus der Gruppe Wasserstoff, (C₁-C₆)-Alkyl, (C₁-C₆)-Haloalkyl, (C₃-C₆)-Cycloalkyl und (C₃-C₆)-Cycloalkyl-(C₁-C₄)-alkyl, vorzugsweise (C₁-C₄)-Alkyl und (C₁-C₄)-Haloalkyl substituiert sind.

Durch Halogen substituiertes Alkyl (= Haloalkyl) bedeutet dabei Alkyl, das durch ein oder mehrere Halogenatome aus der Gruppe Fluor, Chlor, Brom und Iod, vorzugsweise aus der Gruppe Fluor, Chlor und Brom, insbesondere aus der Gruppe Fluor und Chlor substituiert ist.

Bevorzugt sind auch Verbindungen der Formeln (I) bis (V), worin die eine Aminogruppe unsubstituiert ist, d.h. NH₂ bedeutet, und die andere Aminogruppe ein Wasserstoffatom und den (Hetero)aryl(hetero)alkylrest trägt.

Bevorzugt als Wirkstoffe sind beispielsweise 2,4-Diamino-s-triazine der Formel (la) 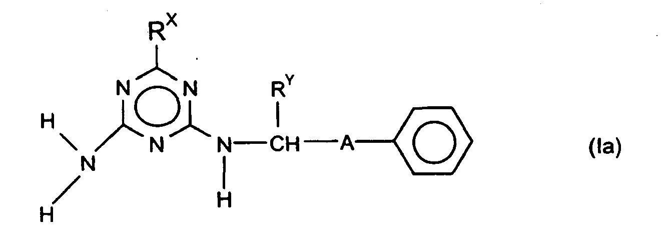 worin
- R^{X}: (C₁-C₄)-Alkyl oder (C₁-C₄)-Haloalkyl;
- R^{Y}: (C₁-C₄)-Alkyl, (C₃-C₆)-Cycloalkyl oder (C₃-C₆)-Cycloalkyl-(C₁-C₄)-Alkyl und
- A: -CH₂-, -CH₂CH₂-, -CH₂CH₂CH₂-, -O-, -CH₂CH₂-O- oder -CH₂CH₂CH₂-O-.

Bevorzugt sind auch Verbindungen der Formel (III) mit bicyclischen Resten, wie sie aus WO-A-97/31904 oder WO-A-04/069814 bekannt sind (siehe Tabelle A):

Bevorzugte Wirkstoffe aus der Gruppe der Diaminotriazine sind beispielsweise in der folgenden Tabelle A aufgeführt.

**Tabelle A:**

| Nr. | Chemischer Name |
|---|---|
| A-1 | (*RS*)-2-Amino-4-(4-pheny)-1-cyclopropyl-butylamino)-6-(1-fluor-1-methyl-ethyl)-1,3,5-triazin, |
| A-2 | (*R*)-2-Amino-4-(4-phenyl-1-cyclopropyl-butylamino)-6-(1-fluor-1-methyl-ethyl)-1,3,5-triazin, |
| A-3 | (*S*)-2-Amino-4-(4-phenyl-1-cyclopropyl-butylamino)-6-(1-fluor-1-methyl-ethyl)-1,3,5-triazin, |
| A-4 | 2-Amino-4-[(1*RS*)-4-phenyl-1-cyclopropyl-butylamino]-6-[(1*RS*)-1-fluor-ethyl]-1,3,5-triazin, |
| A-5 | 2-Amino-4-[(1*R*)-4-pheny)-1-cyclopropyl-butylamino]-6-[(1*RS*)-1-fluor-ethyl]-1,3,5-triazin, |
| A-6 | 2-Amino-4-[(1*S*)-4-pheny)-1-cyclopropyl-butylamino]-6-[(1*RS*)-1-fluor-ethyl]-1,3,5-triazin, |
| A-7 | 2-Amino-4-[(1*R*)-4-pheny)-1-cyclopropyl-butylamino]-6-[(1*R*)-1-fluor-ethyl]-1,3,5-triazin, |
| A-8 | 2-Amino-4-[(1*S*)-4-phenyl-1-cyclopropyl-butylamino]-6-[(1*R*)-1-fluor-ethyl]-1,3,5-triazin, |
| A-9 | 2-Amino-4-[(1*R*)-4-pheny)-1-cyclopropyl-butylamino]-6-[(1*S*)-1-fluor-ethyl]-1,3,5-triazin, |
| A-10 | 2-Amino-4-[(1*S*)-4-pheny)-1-cyclopropyl-butylamino]-6-[(1*S*)-1-fluor-ethyl]-1,3,5-triazin, |
| A-11 | (*RS*)-2-Amino-4-(3-phenyl-1-cyclobutyl-propylamino)-6-(1-fluor-1-methyl-ethyl)-1,3,5-triazin, |
| A-12 | (*R*)-2-Amino-4-(3-phenyl-1-cyclobutyl-propylamino)-6-(1-fluor-1-methyl-ethyl)-1,3,5-triazin, |
| A-13 | (*S*)-2-Amino-4-(3-phenyl-1-cyclobutyl-propylamino)-6-(1-fluor-1-methyl-ethyl)-1,3,5-triazin, |
| A-14 | 2-Amino-4-[(1*RS*)-3-phenyl-1-cyclobutyl-propylamino]-6-[(1*RS*)-1-fluor-ethyl]-1,3,5-triazin, |
| A-15 | 2-Amino-4-[(1*R*)-3-pheny)-1-cyclobutyl-propylamino]-6-[(1*RS*)-1-fluor-ethyl]-1,3,5-triazin, |
| A-16 | 2-Amino-4-[(1*S*)-3-pheny)-1-cyclobutyl-propylamino]-6-[(1*RS*)-1-fluor-ethyl]-1,3,5-triazin, |
| A-17 | 2-Amino-4-[(1*R*)-3-phenyl-1-cyclobutyl-propylamino]-6-[(1*R*)-1-fluor-ethyl]-1,3,5-triazin, |
| A-18 | 2-Amino-4-[(1*S*)-3-phenyl-1-cyclobutyl-propylamino]-6-[(1*R*)-1-fluor-ethyl]-1,3,5-triazin, |
| A-19 | 2-Amino-4-[(1*R*)-3-phenyl-1-cyclobutyl-propylamino)-6-[(1*S*)-1-fluor-ethyl]-1,3,5-triazin, |
| A-20 | 2-Amino-4-[(1*S*)-3-phenyl-1-cyclobutyl-propylamino]-6-[(1*S*)-1-fluor-ethyl]-1,3,5-triazin, |
| A-21 | (*RS*)-2-Amino-6-(1-fluor-1-methyl-ethyl)-4-[1-(3,5-dimethylphenoxy)-prop-2-ylamino)-1,3,5-triazin, |
| A-22 | (*R*)-2-Amino-4-(3-phenyl-1-cyclobutyl-propylamino)-6-(1-fluor-1-methyl-ethyl)-1,3,5-triazin, |
| A-23 | (*S*)-2-Amino-4-(3-phenyl-1-cyclobutyl-propylamino)-6-(1-fluor-1-methyl-ethyl)-1,3,5-triazin, |
| A-24 | 2-Amino-4-[(4*RS*)-chroman-4-ylamino]-6-(1-fluor-1-methylethyl)-1,3,5-triazin, |
| A-25 | 2-Amino-4-[(4*R*)-chroman-4-ylamino]-6-(1-fluor-1-methylethyl)-1,3,5-triazin, |
| A-26 | 2-Amino-4-[(4*R*)-chroman-4-ylamino]-6-[(1*RS*)-1-fluor-ethyl]-1,3,5-triazin, |
| A-27 | 2-Amino-4-[(4*R*)-chroman-4-ylamino]-6-[(1*R*)-1-fluor-ethyl]-1,3,5-triazin, |
| A-28 | 2-Amino-4-[(4*R*)-chroman-4-ylamino]-6-[(1*S*)-1-fluor-ethyl]-1,3,5-triazin, |
| A-29 | 2-Amino-4-[(4*RS*)-7,8-dimethylchroman-4-ylamino]-6-(1-fluor-1-methylethyl)-1,3,5-triazin, |
| A-30 | 2-Amino-4-[(4*R*)-7,8-dimethyl-chroman-4-ylamino]-6-(1-fluor-1-methylethyl)-1,3,5-triazin, |
| A-31 | 2-Amino-4-[(1*RS*)indan-1-ylamino]-6-(1-fluor-1-methylethyl]-1,3,5-triazin, |
| A-32 | 2-Amino-4-[(1*R*)-indan-1-ylamino]-6-(1-fluor-1-methylethyl]-1,3,5-triazin, |
| A-33 | 2-Amino-4-[(1*RS*)-6-methyl-indan-1-ylamino]-6-(1-methylethyl]-1,3,5-triazin, |
| A-34 | 2-Amino-4-[(1*R*)-6-methyl-indan-1-ylamino]-6-(1-methylethyl]-1,3,5-triazin, |
| A-35 | 2-Amino-4-[(1*RS*)-6-fluor-indan-1-ylamino]-6-(1-fluor-1-methylethyl]-1,3,5-triazin, |
| A-36 | 2-Amino-4-[(1*R*)-6-fluor-indan-1-ylamino]-6-(1-fluor-1-methylethyl]-1,3,5-triazin, |
| A-37 | 2-Amino-4-[(1*RS*,2*RS*)-2-methyl-indan-1-ylamino]-6-(1-fluor-1-methylethyl]-1,3,5-triazin, |
| A-38 | 2-Amino-4-[(1*R*,2*RS*)-2-methyl-indan-1-ylamino]-6-(1-fluor-1-methylethyl]-1,3,5-triazin, |
| A-39 | 2-Amino-4-[(1*R*,2*S*)-2-methyl-indan-1-ylamino]-6-(1-fluor-1-methylethyl]-1,3,5-triazin, |
| A-40 | 2-Amino-4-[(1*R*,2*R*)-2-methyl-indan-1-ylamino]-6-(1-fluor-1-methylethyl]-1,3,5-triazin, |
| A-41 | 2-Amino,-4-[(1*RS*,2*RS*)-2,6-dimethyl-indan-1-ylamino]-6-(1-fluor-1-methylethyl]-1,3,5-triazin, |
| A-42 | 2-Amino-4-[(1*R*,2*S*)-2,6-dimethyl-indan-1-ylamino]-6-(1-fluor1-methylethyl]-1,3,5-triazin, |
| A-43 | 2-Amino-4-[(1*R*,2*R*)-2,6-dimethyl-indan-1-ylamino]-6-(1-fluor-1-methylethyl]-1,3,5-triazin, |
| A-44 | 2-Amino-4-[(1*RS*,2*RS*)-6-fluor-2-methyl-indan-1-ylamino]-6-(1-fluor1-methylethyl]-1,3,5-triazin, |
| A-45 | 2-Amino-4-[(1*R*,2*S*)-6-fluor-2-methyl-indan-1-ylamino]-6-(1-fluor-1-methylethyl]-1,3,5-triazin, |
| A-46 | 2-Amino-4-[(1*R*,2*R*)-6-fluor-2-methyl-indan-1-ylamino]-6-(1-fluor-1-methylethyl]-1,3,5-triazin, |
| A-47 | 2-Amino-4-[(1*RS*,2*RS*)-6-fluor-2-methyl-indan-1-ylamino]-6-[(1*RS*)-1-fluor-ethyl]-1,3,5-triazin, |
| A-48 | 2-Amino-4-[(1*R*,2*S*)-6-fluor-2-methyl-indan-1-ylamino]-6-[(1*RS*)-1-fluor-ethyl]-1,3,5-triazin, |
| A-49 | 2-Amino-4-[(1*R*,2*R*)-6-fluor-2-methyl-indan-1-ylamino]-6-[(1*RS*)-1-fluorethyl]-1,3,5-triazin, |
| A-50 | 2-Amino-4-[(1*R*,2*S*)-6-fluor-2-methyl-indan-1-ylamino]-6-[(1*R*)-1-fluorethyl]-1,3,5-triazin, |
| A-51 | 2-Amino-4-[(1*R*,2*R*)-6-fluor-2-methyl-indan-1-ylamino]-6-[(1*R*)-1-fluorethyl]-1,3,5-triazin, |
| A-52 | 2-Amino-4-[(1*R*,2*S*)-6-fluor-2-methyl-indan-1-ylamino]-6-[(1*S*)-1-fluorethyl]-1,3,5-triazin, |
| A-53 | 2-Amino-4-[(1*R*,2*R*)-6-fluor-2-methyl-indan-1-ylamino]-6-[(1*S*)-1-fluorethyl]-1,3,5-triazin, |
| A-54 | 2-Amino-4-[(1*RS*,2*RS*)-2,6-dimethyl-indan-1-ylamino)-6-[(1*RS*)-1-fluorethyl]-1,3,5-triazin, |
| A-55 | 2-Amino-4-[(1*R*,2*S*)-2,6-dimethyl-indan-1-ylamino]-6-[(1*RS*)-1-fluorethyl]-1,3,5-triazin, |
| A-56 | 2-Amino-4-[(1*R*,2*R*)-2,6-dimethyl-indan-1-ylamino]-6-[(1*RS*)-1-fluorethyl]-1,3,5-triazin, |
| A-57 | 2-Amino-4-[(1*R*,2*S*)-2,6-dimethy)-indan-1-ylamino]-6-[(1*R*)-1-fluor-ethyl]-1,3,5-triazin, |
| A-58 | 2-Amino-4-[(1*R*,2*R*)-2,6-dimethyl-indan-1-ylamino]-6-[(1*R*)-1-fluor-ethyl]-1,3,5-triazin, |
| A-59 | 2-Amino-4-[(1*R*,2*S*)-2,6-dimethyl-indan-1-ylamino]-6-[(1*S*)-1-fluor-ethyl]-1,3,5-triazin, |
| A-60 | 2-Amino-4-[(1*R*,2*R*)-2,6-dimethyl-indan-1-ylamino]-6-[(1*S*)-1-fluor-ethyl]-1,3,5-triazin, |
| A-61 | 2-Amino-4-[(1*RS*)-4,6-dimethyl-indan-1-ylamino]-6-(1-fluor-1-methylethyl)-1,3,5-triazin, |
| A-62 | 2-Amino-4-[(1*R*)-4,6-dimethyl-indan-1-ylamino]-6-(1-fluor-1-methylethyl)-1,3,5-triazin, |
| A-63 | 2-Amino-4-[(1*RS*)-4,6-dimethyl-indan-1-ylamino]-6-[(1*RS*)-1-fluorethyl]-1,3,5-triazin, |
| A-64 | 2-Amino-4-[(1*R*)-4,6-dimethyl-indan-1-ylamino]-6-[(1*RS*)-1-fluorethyl]-1,3,5-triazin, |
| A-65 | 2-Amino-4-[(1*R*)-4,6-dimethyl-indan-1-ylamino]-6-[(1*R*)-1-fluorethyl]-1,3,5-triazin, |
| A-66 | 2-Amino-4-[(1*R*)-4,6-dimethyl-indan-1-ylamino]-6-[(1*S*)-1-fluor-ethyl]-1,3,5-triazin, |
| A-67 | 2-Amino-4-[(1*RS*)-5,6-dimethyl-indan-1-ylamino]-6-(1-fluor-1-methylethyl)-1,3,5-triazin, |
| A-68 | 2-Amino-4-[(1*R*)-5,6-dimethyl-indan-1-ylamino]-6-(1-fluor-1-methylethyl)-1,3,5-triazin, |
| A-69 | 2-Amino-4-[(1*RS*)-5,6-dimethyl-indan-1-ylamino]-6-[(1*RS*)-1-fluorethyl]-1,3,5-triazin, |
| A-70 | 2-Amino-4-[(1*R*)-5,6-dimethyl-indan-1-ylamino]-6-[(1*RS*)-1-fluorethyl]-1,3,5-triazin, |
| A-71 | 2-Amino-4-[(1*R*)-5,6-dimethyl-indan-1-ylamino]-6-[(1*R*)-1-fluorethyl]-1,3,5- triazin, |
| A-72 | 2-Amino-4-[(1*R*)-5,6-dimethyl-indan-1-ylamino]-6-[(1*S*)-1-fluor-ethyl]-1,3,5-triazin, |
| A-73 | 2-Amino-4-[(1*RS*)-indan-1-ylamino]-1,3,5-triazin, |
| A-74 | 2-Amino-4-[(1*R*)-indan-1-ylamino]-1,3,5-triazin, |
| A-75 | 2-Amino-4-[(1*RS*)-6-methylindan-1-ylamino]-1,3,5-triazin, |
| A-76 | 2-Amino-4-[(1*R*)-6-methylindan-1-ylamino]-1,3,5-triazin, |
| A-77 | 2-Amino-4-[(1*RS*)-6-fluorindan-1-ylamino]-1,3,5-triazin, |
| A-78 | 2-Amino-4-[(1*R*)-6-fluorindan-1-ylamino]-1,3,5-triazin, |
| A-79 | 2-Amino-4-[(1*RS*,2*RS*)-2-methyl-indan-1-ylamino]-1,3,5-triazin, |
| A-80 | 2-Amino-4-[(1*R*,2*S*)-2-methyl-indan-1-ylamino]-1,3,5-triazin, |
| A-81 | 2-Amino-4-[(1*R*,2*R*)-2-methyl-indan-1-ylamino]-1,3,5-triazin, |
| A-82 | 2-Amino-4-[(1*RS*,2*RS*)-2,6-dimethyl-indan-1-ylamino]-1,3,5-triazin, |
| A-83 | 2-Amino-4-[(1*R*,2*S*)-2,6-dimethyl-indan-1-ylamino]-1,3,5-triazin, |
| A-84 | 2-Amino-4-[(1*R*,2*R*)-2,6-dimethyl-indan-1-ylamino]-1,3,5-triazin, |
| A-85 | 2-Amino-4-[(1*RS*)-5,6-dimethylindan-1-ylamino]-1,3,5-triazin, |
| A-86 | 2-Amino-4-[(1*R*)-4,6-dimethylindan-1-ylamino]-1,3,5-triazin, |
| A-87 | 2-Amino-4-[(1*RS*)-4,6-dimethylindan-1-ylamino)-1,3,5-triazin, |
| A-88 | 2-Amino-4-[(1*R*)-4,6-dimethylindan-1-ylamino)-1,3,5-triazin, |
| A-89 | 2-Amino-4-[(1*RS*)-5-fluor-6-methylindan-1-ylamino]-1,3,5-triazin, |
| A-90 | 2-Amino-4-[(1*R*)-5-fluor-6-methylindan-1-ylaminol-1,3,5-thazin, |
| A-91 | 2-Amino-4-[(1*RS*)-1,2,3,4-tetrahydronaphthalin-1-ylamino]-6-(1-fluor-1-methylethyl)-1,3,5-triazin, |
| A-92 | 2-Amino-4-[(1*R*)-1,2,3,4-tetrahydronaphthalin-1-ylamino]-6-(1-fluor-1-methylethyl)-1,3,5-triazin, |
| A-93 | 2-Amino-4-[(1*RS*)-1,2,3,4-tetrahydronaphthalin-1-ylaminol-6-[(1*RS*)-1-fluorethyl]-1,3,5-triazin, |
| A-94 | 2-Amino-4-[(1*R*)-1,2,3,4-tetrahydronaphthalin-1-ylamino]-6-[(1*RS*)-1-fluorethyl]-1,3,5-triazin, |
| A-95 | 2-Amino-4-[(1*R*)-1,2,3,4-tetrahydronaphthalin-1-ylamino]-6-[(1*R*)-1-fluorethyl]-1,3,5-triazin, |
| A-96 | 2-Amino-4-[(1*R*)-1,2,3,4-tetrahydronaphthalin-1-ylamino]-6-[(1S)-1-fluorethyl]-1,3,5-triazin, |
| A-97 | 2-Amino-4-[(1*RS*,2*RS*)-2-methyl-1,2,3,4-tetrahydronaphthalin-1-ylamino]-6-(1-fluor-1-methylethyl)-1,3,5-triazin, |
| A-98 | 2-Amino-4-[(1*R*,2*S*)-2-methyl-1,2,3,4-tetrahydronaphthalin-1-ylamino]-6-(1-fluor-1-methylethyl)-1,3,5-triazin, |
| A-99 | 2-Amino-4-[(1*R*,2*R*)-2-methyl-1,2,3,4-tetrahydronaphthalin-1-ylamino]-6-(1-fluor-1-methylethyl)1,3,5-triazin, |
| A-100 | 2-Amino-4-[(1*RS*,*2RS*)-2-methy)-1,2,3,4-tetrahydronaphthatin-1-ylamino]-6-[(1*RS*)-1-fluorethyl]-1,3,5-triazin, |
| A-101 | 2-Amino-4-[(1*R*,2*S*)-2-methyl-1,2,3,4-tetrahydronaphthalin-1-ylamino]-6-[(1*RS*)-1-fluorethyl]-1,3,5-thazin, |
| A-102 | 2-Amino-4-[(1*R*,2*R*)-2-methyl-1,2,3,4-tetrahydronaphthatin-1-ylamino]-6- [(1*RS*)-1-fluorethyl]-1,3,5-thazin, |
| A-103 | 2-Amino-4-[(1*R*,2*S*)-2-methy)-1,2,3,4-tetrahydronaphthalin-1-ylamino]-6-[(1S)-1-fluorethyl]-1,3,5-triazin, |
| A-104 | 2-Amino-4-[(1*R*,2*S*)-2-methyl-1,2,3,4-tetrahydronaphthalin-1-ylamino]-6-[(1*R*)-1-fluorethyl]-1,3,5-triazin, |
| A-105 | 2-Amino-4-[(1*R*,2*R*)-2-methyl-1,2,3,4-tetrahydronaphthalin-1-ylamino]-6-[(1*R*)-1-fluorethyl]-1,3,5-triazin, |
| A-106 | 2-Amino-4-[(1*R*,2*R*)-2-methyl-1,2,3,4-tetrahydronaphthalin-1-ylamino]-6-[(1*S*)-1-fluorethyl]-1,3,5-triazin, |
| A-107 | 2-Amino-4-[(1*RS*)-6-methyl-1,2,3,4-tetrahydronaphthalin-1-ylamino]-6-(1-fluor-1-methylethyl)-1,3,5-triazin, |
| A-108 | 2-Amino-4-[(1*R*)-6-methyl-1,2,3,4-tetrahydronaphthalin-1-ylamino]-6-(1-fluor-1-methylethyl)-1,3,5-triazin, |
| A-109 | 2-Amino-4-[(1*RS*,2*RS*)-2,6-dimethyl-1,2,3,4-tetrahydronaphthalin-1-ylamino]-6-(1-fluor -methylethyl)-1,3,5-triazin, |
| A-110 | 2-Amino-4-[(1*R*,2*S*)-2,6-dimethyl-1,2,3,4-tetrahydronaphthalin-1-ylamino]-6-(1-fluor-1-methylethyl)-1,3,5-triazin, |
| A-111 | 2-Amino-4-[(1*RS*,2*R*)-2,6-dimethyl-1,2,3,4-tetrahydronaphthalin-1-ylamino]-6-(1-fluor-1-methylethyl)-1,3,5-triazin, |
| A-112 | 2-Amino-4-[(1*RS*)-6-methyl-1,2,3,4-tetrahydronaphthalin-1-ylamino]-6-(1-fluor-1-methylethyl)-1,3,5-triazin, |
| A-113 | 2-Amino-4-[(1*R*)-6-methyl-1,2,3,4-tetrahydronaphthalin-1-ylamino]-6-(1-fluor-1-methylethyl)-1,3,5-triazin, |
| A-114 | 2-Amino-4-[(1*RS*)-1,2,3,4-tetrahydronaphthatin-1-ylamino]-6-ethyl-1,3,5-triazin, |
| A-115 | 2-Amino-4-[(1*R*)-1,2,3,4-tetrahydronaphthalin-1-ylamino]-6-ethyl-1,3,5-triazin, |
| A-116 | 2-Amino-4-[(1*RS*)-6-methy)-1,2,3,4-tetrahydronaphthalin-1-ylamino]-6-ethyl-1,3,5-triazin, |
| A-117 | 2-Amino-4-[(1*R*)-6-methyl-1,2,3,4-tetrahydronaphthalin-1-ylamino]-6-ethyl-1,3,5-triazin, |
| A-118 | 2-Amino-4-[(1*RS*)-4,6-dimethyl-1,2,3,4-tetrahydronaphthalin-1-ylamino]-6-ethyl-1,3,5-triazin, |
| A-119 | 2-Amino-4-[(1*R*)-4,6-dimethy)-1,2,3,4-tetrahydronaphthalin-1-ylamino]-6-ethyl-1,3,5-triazin, |
| A-120 | 2-Amino-4-[(1*RS*)-5-fluor-6-methyl-1,2,3,4-tetrahydronaphthalin-1-ylamino]-6-ethyl-1,3,5-triazin, |
| A-121 | 2-Amino,-4-[(1*R)*-5-fluor-6-methyl-1,2,3,4-tetrahydronaphthalin-1-ylamino]-6-ethyl-1,3,5-triazin, |
| A-122 | 2-Amino-4-[(1*RS*)-5-fluor-6-methyl-1,2,3,4-tetrahydronaphthalin-1-ylamino]-6-ethyl-1,3,5-triazin, |
| A-123 | 2-Amino-4-[(1*R*)-5-fluor-6-methyl-1,2,3,4-tetrahydronaphthalin-1-ylamino]-6-ethyl-1,3,5-triazin, |
| A-124 | 2-Amino-4-[(1*RS*,2*RS*)-2,6-dimethyl-1,2,3,4-tetrahydronaphthalin-1 -ylamino]-6-ethyl-1,3,5-triazin, |
| A-125 | 2-Amino-4-[(1*R*,2*S*)-2,6-dimethyl-1,2,3,4-tetrahydronaphthalin-1-ylamino]-6-ethyl-1,3,5-triazin, |
| A-126 | 2-Amino-4-[(1*R*,2*R*)-2,6-dimethyl-1,2,3,4-tetrahydronaphthalin-1-ylamino]-6-ethyl-1,3,5-triazin, |
| A-127 | 2-Amino-4-[(1*RS*)-1,2,3,4-tetrahydronaphthalin-1-ylamino]-1,3,5-triazin. |
| A-128 | 2-Amino-4-[(1*R*)-1,2,3,4-tetrahydronaphthalin-1-ylamino]-1,3,5-triazin, |
| A-129 | 2-Amino-4-[(1*RS*,2*RS*)-2-methyl-1,2,3,4-tetrahydronaphthalin-1-ylamino]-1,3,5-triazin, |
| A-130 | 2-Amino-4-[(1*R*,2*S*)-2-methyl-1,2,3,4-tetrahydronaphthalin-1-ylamino]-1,3,5-triazin, |
| A-131 | 2-Amino-4-[(1*R*,2*R*)-2-methyl-1,2,3,4-tetrahydronaphthalin-1-ylamino]-1,3,5-triazin, |
| A-132 | 2-Amino-4-[(1*RS*,2*RS*)-2,6-dimethyl-1,2,3,4-tetrahydronaphthalin-1-ylamino]-1,3,5-triazin, |
| A-133 | 2-Amino-4-[(1*R*,2*S*)-2,6-dimethyl-1,2,3,4-tetrahydronaphthalin-1-ylamino]-1,3,5-triazin, |
| A-134 | 2-Amino-4-[(1*R*,2*R*)-2,6-dimethyl-1,2,3,4-tetrahydronaphthalin-1-ylamino]-1,3,5-triazin, |
| A-135 | 2-Amino-4-[(1*RS*)-5,6-dimethyl-1,2,3,4-tetrahydronaphthatin-1-ylamino]-1,3,5-triazin, |
| A-136 | 2-Amino-4-[(1*R*)-5,6-dimethyl-1,2,3,4-tetrahydronaphthatin-1-ylamino]-1,3,5-triazin, |
| A-137 | 2-Amino-4-[(1*RS*)-4,6-dimethyl-1,2,3,4-tetrahydronaphthalin-1-ylamino]-1,3,5-triazin, |
| A-138 | 2-Amino-4-[(1*R*)-4,6-dimethyl-1,2,3,4-tetrahydronaphthalin-1-ylamino]-1,3,5-triazin, |
| A-139 | 2-Amino-4-[(1*RS*)-5-fluor-6-methyl-1,2,3,4-tetrahydronaphthalin-1-ylamino]-1,3,5-triazin, |
| A-140 | 2-Amino-4-[(1*R*)-5-fluor-6-methyl-1,2,3,4-tetrahydronaphthalin-1-ylamino]-1,3,5-triazin, |

Bevorzugt sind auch Salze, vorzugsweise Säureadditionssalze, der Verbindungen aus der Tabelle A, beispielsweise deren Hydrochloride.

Der Anteil an Wirkstoffen (Komponente 1) in den erfindungsgemäßen Suspensionskonzentraten beträgt vorzugsweise 0,1 bis 60 Gew.-%, insbesondere 0,5 bis 55 Gew.%, weiter bevorzugt 0,5 bis 50 Gew.-%, weiter bevorzugt 1 bis 50 Gew.%, weiter bevorzugt 1 bis 10 Gew.% oder bei vergleichsweise höher wirksamen Stoffen 0,5 bis 10 Gew.-%, weiter bevorzugt 1 bis 5 Gew.-%.

Beispiele für geeignete phosphatgruppenhaltige Derivate der Aminosäuren Glycin/Hornoalanin (Komponente 2) sind Verbindungen der nachstehend genannten Formeln (V) und (VI), d.h.

### 1. Verbindungen der Formel (V),

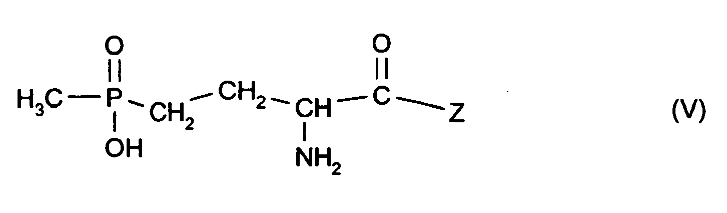

worin Z einen Rest der Formel -OH oder einen Peptidrest der Formel
-NHCH(CH₃)CONHCH(CH₃)COOH oder
-NHCH(CH₃)CONHCH[CH₂CH(CH₃)₂]COOH bedeutet, und deren Ester und Salze,
vorzugsweise Glufosinate und dessen Salze mit Säuren und Basen, insbesondere Glufosinate-ammonium, L-Glufosinate oder dessen Salze, Bialaphos und dessen Salze mit Säuren und Basen und andere Phosphinothricin-Derivate.

Die Formel (V) umfasst alle Stereoisomeren und deren Gemische, insbesondere das Racemat und das jeweils biologisch wirksame Enantiomere, z. B. L-Glufosinate und dessen Salze.

Bevorzugte Beispiele für Verbindungen der Formel (V) sind:

| | |
|---|---|
| (V.1) | Glufosinate im engeren Sinne, d. h. D,L-2-Amino-4-[hydroxy(methyl)phosphinyl]-butansäure, |
| (V.2) | Glufosinate-monoammoniumsalz, |
| (V.3) | L-Glufosinate, L- oder (2S)-2-Amino-4-[hydroxy(methyl)phosphinyl]-butansäure (Phosphinothricin) |
| (V.4) | L-Glufosinate-monoammoniumsalz, |
| (V.5) | Bialaphos (oder Bilanafos), d.h. L-2-Amino-4-[hydroxy(methyl)phosphinyl]-butanoyl-L-alanyl-L-alanin, insbesondere dessen Natriumsalz. |

Die genannten Verbindungen (V.1) bis (V.5) werden über die grünen Teile der Pflanzen aufgenommen und sind als Breitspektrum-Herbizide oder Totalherbizide bekannt; sie sind Hemmstoffe des Enzyms Glutaminsynthetase in Pflanzen (siehe "The Pesticide Manual" 11th Edition, British Crop Protection Council 1997, S. 643-645 bzw. 120-121). Während ein Einsatzgebiet im Nachauflauf-Verfahren zur Bekämpfung von Unkräutern und Ungräsern in Plantagen-Kulturen und auf Nichtkulturland sowie mittels spezieller Applikationstechniken auch zur Zwischenreihenbekämpfung in landwirtschaftlichen Flächenkulturen wie Mais, Baumwolle u.a. besteht, nimmt die Bedeutung der Verwendung als selektives Herbizid in toleranten oder resistenten transgenen Pflanzenkulturen zu. Glufosinate wird üblicherweise in Form eines Salzes, vorzugsweise des Ammoniumsalzes eingesetzt. Das Racemat von Glufosinate bzw. Glufosinate-ammonium wird alleine üblicherweise in Dosierungen ausgebracht, die zwischen 50 und 2000 g Aktivsubstanz pro Hektar liegen. Glufosinate ist in diesen Dosierungen vor allem dann wirksam, wenn es über grüne Pflanzenteile aufgenommen wird. Da es im Boden mikrobiell innerhalb weniger Tage abgebaut wird, hat es keine Dauerwirkung im Boden. Ähnliches gilt auch für den verwandten Wirkstoff Bialaphos-Natrium (auch Bilanafos-Natrium; siehe "The Pesticide Manual" 11th Ed., British Crop Protection Council 1997 S. 120-121).

### 2. Verbindungen der Formel (VI) und deren Ester und Salze,

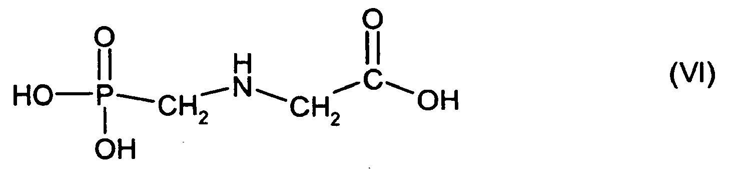

vorzugsweise Glyphosate und dessen Alkalimetallsalze oder Salze mit Aminen, insbesondere Glyphosate-isopropylammonium, und Sulfosate.

Bevorzugte Beispiele für Verbindungen der Formel (VI) sind:
- (VI.1): Glyphosate, d. h. N-(Phosphonomethyl)-glycin,
- (VI.2): Glyphosate-monoisopropylammoniumsalz,
- (VI.3): Glyphosate-natriumsalz,
- (VI.4): Sulfosate, d.h. N-(Phosphonomethyl)-glycin-trimesiumsalz = N- (Phosphonomethyl)-glycin-trimethylsulfoxoniumsalz,

Glyphosate wird üblicherweise in Form eines Salzes, vorzugsweise des Monoisopropylammoniumsalzes oder des Trimethylsulfoxoniumsalzes (=Trimesiumsalzes = Sulfosate) eingesetzt. Bezogen auf die freie Säure Glyphosate liegt die Einzeldosierung im Bereich von 0,050-5 kg Aktivsubstanz pro Hektar.

Glyphosate ist unter manchen anwendungstechnischen Aspekten dem Glufosinate ähnlich, jedoch ist es im Gegensatz dazu ein Hemmstoff für des Enzyms 5-Enolpyruvylshikimat-3-phosphat-Syntase in Pflanzen (siehe "The Pesticide Manual" 11th Ed., British Crop Protection Council 1997 S. 646-649). Auch hier nimmt die Bedeutung der Verwendung als selektives Herbizid in toleranten oder resistenten transgenen Pflanzenkulturen zu.

Die Verbindungen der Formel (V) und (VI) sind bekannt oder können analog bekannten Verfahren hergestellt werden.

Der Anteil an Wirkstoffen (Komponente 2) in den erfindungsgemäßen Suspensionskonzentraten beträgt vorzugsweise 0,1 bis 65 Gew.-%, insbesondere 0,2 bis 50 Gew.%, weiter bevorzugt 1 bis 45 Gew.-%, weiter bevorzugt 5 bis 30 Gew.-%.

In Einzelfällen kann es sinnvoll sein, eine oder mehrere der Verbindungen der Komponente (1) mit mehreren Verbindungen der Komponente (2) zu kombinieren, wobei dies auch in umgekehrter Reihenfolge gilt.

Weiterhin können die erfindungsgemäßen Kombinationen zusammen mit anderen Wirkstoffen beispielsweise aus der Gruppe der Safener, Fungizide, Insektizide und Pflanzenwachstumsregulatoren oder aus der Gruppe der im Pflanzenschutz üblichen Zusatzstoffe, wie beispielsweise Düngemittel und Farbstoffe, eingesetzt werden.

Ebenso können aber auch noch weitere, zusätzliche Wirkstoffe aus der Gruppe der Herbizide hinzugefügt werden, wie sie beispielsweise in "The Pesticide Manual", 13th Edition, British Crop Protection Council, 2005) beschrieben sind, wie z.B. Mecoprop (Nummer 503).

Bei den Tensiden (Komponente 3) auf Basis nicht salzartiger, substituierter Phenolether handelt es sich beispielsweise um nichtionogene (nichtionische) mono-, di- oder vorzugsweise trisubstituierte Phenole, die alkoxyliert sein können, z.B. ethoxyliert und/oder propoxyliert und/oder butoxyliert. Hierbei liegt die Anzahl der Alkylenoxy-Einheiten beispielsweise im Bereich zwischen 1 und 100, vorzugsweise 3 - 60, besonders bevorzugt 5 - 25. Substituenten am Phenolring der Phenolderivate sind bevorzugt Styryl- oder Isoalkylreste. Mit "Styrylrest" wird hierbei der Rest bezeichnet, der durch aromatische Substitution mit Styrol am Phenol entsteht, d.h. ein "1-Phenyl-ethyl-Rest". Beispiele sind Phenyl-(C₁-C₄)alkyl-ether oder (poly)alkoxylierte Phenole [= Phenol-(poly)alkylenglykolether], beispielsweise mit 1 bis 50 Alkylenoxy-Einheiten im (Poly)alkylenoxyteil, wobei der Alkylenteil vorzugsweise jeweils 2 bis 4 C-Atome aufweist, vorzugsweise mit 3 bis 10 mol Alkylenoxid umgesetztes Phenol, (Poly)alkylphenole oder (Poly)alkylphenolalkoxylate [= Polyalkylphenol-(poly)alkylenglykolether], beispielsweise mit 1 bis 12 C-Atomen pro Alkylrest und 1 bis 150 Alkylenoxy-Einheiten im Polyalkylenoxyteil, vorzugsweise mit 1 bis 50 mol Ethylenoxid umgesetztes Tri-n-butylphenol oder Trisobutylphenol, Polyarylphenole oder Polyarylphenolalkoxylate [= Polyarylphenol-(poly)alkylenglykolether], beispielsweise Tristyrylphenolpolyalkylenglykolether mit 1 bis 150 Alkylenoxy-Einheiten im Polyalkylenoxyteil, vorzugsweise mit 1 bis 50 mol Ethylenoxid umgesetztes Tristyrylphenol (= Tristyrylphenol mit 1 bis 50 EO = Ethylenoxy-Einheiten).

Die genannten nichtionischen Tenside können auch mit funktionellen Gruppen modifiziert sein, beispielsweise phosphatiert oder sulfatiert sein, müssen dann jedoch als Komponente (3) in ihrer Säureform und nicht in der neutralisierten Salzform verwendet werden. Dabei wird die Salzbildung der letztgenannten Tenside mit weiteren geeigneten basischen Komponenten der Formulierung nicht ausgeschlossen, ist aber in der Regel nicht bevorzugt. Außerdem kommen phosphatierte oder sulfatierte nicht-ionische Tenside in Frage, in denen die Phosphorsäure- oder Sulfatgruppen voll verestert sind.

Bevorzugt sind Tri-[(C₁-C₄)-alky)]-phenol-alkoxytate mit 1 bis 30 EO oder Tristyrylphenol-alkoxylate mit 10 bis 30 EO. Ebenfalls bevorzugt geeignet sind entsprechend phosphatierte Tenside in der nicht salzartigen (sauren) Form. Beispiele für Tenside der Komponente (3) sind Soprophor^{®} 3D33 (= Tristyryl-phenol, ethoxyliert mit 16 EO und phosphatiert), Soprophor^{®} BSU (= Tristyrylphenol, ethoxyliert mit 16 EO), Soprophor^{®} CY/8 (Rhodia) (= Tristyrylphenol, ethoxyliert mit 20 EO) und Hoe^{®} S3474 (= Tristyrylphenol, ethoxyliert mit 20 EO) und in Form der Sapogenat^{®} T-Produkte (Clariant), beispielsweise Sapogenat^{®} T 100 (= Triisobutylphenol, ethoxyliert mit 10 EO).

Beispiele für nichtionische Tenside der Komponente (3) sind auch mit 4 bis 10 mol Ethylenoxid umgesetztes Phenol, kommerziell beispielsweise in Form der Agrisol^{®}-Produkte (Akcros) erhältlich, mit 4 bis 50 mol Ethylenoxid umgesetztes Nonylphenol, kommerziell beispielsweise in Form der Arkopal^{®}-Produkte (Clariant) zugänglich.

Beispiele für nicht salzartige Tenside der Komponente (3) sind die sauren Phosphorsäureester von mit 1 bis 50 mol Ethylenoxid umgesetztem Tristyrylphenol wie Soprophor^{®} 3D33 oder Soprophor^{®} 4D-384 (Rhodia).

Bevorzugt sind für die Komponente (3) auch Gemische mehrerer Tenside aus der Gruppe der nicht salzartigen substituierten Phenolether.

Bevorzugt sind dabei Gemische aus zweien oder mehreren der genannten nicht ionischen Tenside der Komponente (3); bevorzugt sind auch Gemische aus einem oder mehreren der genannten nichtionischen Tenside und einem oder mehreren der genannten nicht salzartigen (sauren) phosphatierten Tenside der Komponente (3).

Bevorzugt sind Gemische von zwei oder mehreren Tensiden der Komponente (3), die sich in der Zahl der Einheiten in der Polyoxyalkylenkette unterscheiden, vorzugsweise in 2 bis 10 Einheiten unterscheiden.

Der Anteil an Tensiden der Komponente (3) in den erfindungsgemäßen Suspensionskonzentraten beträgt in der Regel 0,01 bis 20 Gew.%, bevorzugt 0,05 bis 10 Gew.%, weiter bevorzugt 0,1 bis 10 Gew.%, besonders bevorzugt 0,1 bis 7 Gew.-% oder auch 1 bis 7 Gew.-%.

Als Verdicker (Komponente 4) kommen in der Regel alle für Pflanzenschutzmittel verwendeten oder geeigneten Verdicker in Frage, beispielsweise anorganische (mineralische) Verdicker wie Verdicker auf Aluminiumsilikatbasis oder Verdicker anderen Typs wie organische Verdickungsmittel, beispielsweise Agar-Agar, Carrageen, Tragant, Gummi arabicum, Alginate, Pektine, Polyose, Guar-Mehl, Johannisbrotbaum-Kernmehl, Stärke, Dextrine, Celluloseether wie Carboxymethylcellulose und Hydroxyethylcellulose, Polyacryl- und Polymethacrylverbindungen, Vinylpolymere, Polyether oder Polyamide.

Als Verdicker (Komponente 4) auf Aluminiumsilikatbasis kommen beispielsweise solche wie Hectorite, Montmorillonite, Saponite, Kaolinite, Bentonite, Attapulgite etc. in Frage.

Beispiele für derartige Verdicker sind die Attagele^{®} von Engelhardt Corp, z.B. Attagel 50, ein Magnesium-Aluminium-Hydrosilikat (Attapulgit) oder die Bentone^{®}-Reihe von Elementis wie Bentone EW, ein Magnesium-Aluminium-Hydrosilikat (Bentonit).

Beispiele für bevorzugte organische Verdicker sind Xanthane (Heteropolysaccharide) wie die Rhodopol^{®}-Produkte von Rhodia, z.B. Rhodopol 50 MC (Xanthan-Gummi) oder Rhodopol 23 (ein Xanthan Heteropolysaccharid).

Die Verdicker können auch in Kombination eingesetzt werden. Dabei können auch Kombinationen von organischen und mineralischen Verdickem zweckmäßig sein.

Der zweckmäßige Anteil an Verdickem hängt von der Viskosität der Formulierung und den einzelnen Verdickem ab und beträgt im Allgemeinen beispielsweise 0,001 bis 10 Gew.-%, vorzugsweise 0,005 bis 5 Gew.-% bezogen auf das Gewicht der Formulierung. Der Anteil an Verdickem auf Alumiriumsilikatbasis in den erfindungsgemäßen Suspensionskonzentraten beträgt vorzugsweise 0,01 bis 5 Gew.-%, bevorzugt 0,1 bis 3,5 Gew.-%. Bei Verdickem vom Xanthan-Typ beträgt der Anteil vorzugsweise 0,001 bis 5 Gew.-%, insbesondere 0,005 bis 1 Gew.-%. Weiterhin können diesen Formulierungen noch weitere Formulierungshilfsmittel (Komponente 5) wie Entschäumer, Frostschutzmittel, Konservierungsmittel, Farbstoffe oder Dünger, sowie von Komponente (3) verschiedene Tenside zugesetzt werden (Komponente 6).

Der Anteil an diesen Formulierungshilfsmitteln (Komponente 5) in den erfindungsgemäßen Suspensionskonzentraten beträgt vorzugsweise 0,1 bis 22 Gew.-%, insbesondere 0,5 bis 18 Gew.-%, weiter bevorzugt 1 bis 15 Gew.-%.

Als Entschäumer kommen Entschäumer auf Siliconbasis von Wacker, Rhodia, Dow Corning und solche auf Acetylenbasis, wie beispielsweise von Airproducts, in Frage. Typische Vertreter geeigneter Entschäumer sind unter anderem Rhodorsil^{®} Silcolapse 5020 (O/W Emulsion Polydimethylsiloxan) und Rhodorsil^{®} 481 (Mischung aus Polydimethylsiloxan und Silicium) von Rhodia.

Als Frostschutzmittel kommen beispielsweise Glykol, Propylenglykol, Glyzerin sowie Harnstoff in Frage.

Als Konservierungsmittel kommen übliche biozide Verbindungen in Frage, beispielsweise Acticide^{®} MBS (Mischung aus 1,2-Benzothiazol-3(2H)-on und 2-Methyl-2H-isothiazol-3-on (Fa. Thor)).

Beispiele für weitere von Komponente (3) verschiedene Tenside (Komponente 6) sind nachfolgend aufgeführt, worin EO=Ethylenoxid-Einheiten, PO=Propylenoxid-Einheiten und BO=Butylenoxid-Einheiten bedeutet:
1) C₁₀-C₂₄-Alkohole, die alkoxyliert sein können, z.B. mit 1-60 Alkylenoxideinheiten, vorzugsweise 1-60 EO und/oder 1-30 PO und/oder 1-15 BO in beliebiger Reihenfolge. Die terminalen Hydroxygruppen dieser Verbindungen können durch einen Alkyl-, Cycloalkyl- oder Acylrest mit 1-24 Kohlenstoffatomen endgruppenverschlossen sein. Beispiele für derartige Verbindungen sind:
   Genapol^{®}C-,L-,O-,T-,UD-,UDD-,X-Produkte von Clariant, Plurafac^{®}- und Lutensol^{®}A-,AT-,ON-,TO-Produkte von BASF, Marlipal^{®}24- und O13 Produkte von Condea, Dehypon^{®}-Produkte von Henkel, Ethylan^{®}-Produkte von Akzo-Nobel wie Ethylan CD 120.
2) Anionische Derivate der unter 1) beschriebenen Produkte in Form von Ethercarboxylaten, Sulfonaten, Sulfaten und Phosphaten und deren anorganischen (z.B. Alkali und Erdalkali) und organischen Salzen (z.B. auf Amin- oder Alkanolaminbasis) wie Genapol^{®}LRO, Sandopane^{®}-Produkte, Hostaphat/Hordaphos^{®}-Produkte von Clariant.
   Copolymere bestehend aus EO, PO und/oder BO Einheiten wie zum Beispiel Blockcopolymere wie die Pluronic^{®}-Produkte von der BASF und die Synperonic^{®}-Produkte von Uniquema mit einem Molekulargewicht von 400 bis 10⁸.
   Alkylenoxydaddukte von C₁-C₉ Alkoholen wie Atlox^{®}5000 von Uniquema oder Hoe^{®}-S3510 von Clariant.
   Typische weitere Vertreter sind unter anderem auch Galoryl^{®} MT 804 (Dibutylnaphthalensulfonat Na-Salz) von Nufam,Geropon^{®} T 36 (Na-Polycarboxylsäure), Supragil^{®} MNS 90 (Methylnaphthalinsulfonsäure Na-Salz Kondensationsprodukt) von Rhodia und Darvan^{®} No. 3 (Natriumsalz polymerisierter Arylalkylsulfonsäuren) von Vanderbilt, die als Dispergiermittel eingesetzt werden können, sowie Geronol^{®} CF/AR (NH₄-Salz Phosphorester ethoxylierter Alkohole) und Supragil^{®} WP (Na-Di-Isopropylnaphthalen Sulfonat) von Rhodia, die als Netzmittel eingesetzt werden können.
3) Fettsäure- und Triglyceridalkoxylate wie die Serdo)^{®}NOG-Produkte von Condea oder alkoxylierte Pflanzenöle wie Sojaöl, Rapsöl, Maiskeimöl, Sonnenblumenöl, Baumwollsaatöl, Leinöl, Kokosöl, Palmöl, Distelöl, Walnussöl, Erdnussöl, Olivenöl oder Rhizinusöl, insbesondere Rapsöl, wobei unter den Pflanzenölen auch deren Umesterungsprodukte verstanden werden, z.B. Alkylester wie Rapsölmethylester oder Rapsölethylester, beispielsweise die Emulsogen^{®}-Produkte von Clariant, Salze von beispielsweise die Emulsogen^{®}-Produkte von Clariant, Salze von aliphatischen, cycloaliphatischen und olefinischen Carbonsäuren und Polycarbonsäuren, sowie Alpha-Sulfofettsäureester wie von Henkel erhältlich.
4) Fettsäureamidalkoxylate wie die Comperlan^{®}-Produkte von Henkel oder die Amam^{®}-Produkte von Rhodia.
   Alkylenoxydaddukte von Alkindiolen wie die Surfynol^{®}-Produkte von Air Products. Zuckerderivate wie Amino- und Amidozucker von Clariant, Glukitole von Clariant, Alkylpolyglycoside in Form der APG^{®}-Produkte von Henkel oder wie Sorbitanester in Form der Span^{®}- oder Tween^{®}-Produkte von Uniquema oder Cyclodextrinester oder -ether von Wacker. Ein typischer Vertreter hier ist unter anderem auch Atplus^{®} 435 (Alkylpolyglykosid Alkylpolysaccharid Mischung) von ICI, der beispielsweise als Netzmittel verwendet werden kann.
5) Oberflächenaktive Cellulose- und Algin-, Pektin- und Guarderivate wie die Tylose^{®}-Produkte von Clariant, die Manutex^{®}-Produkte von Kelco und Guarderivate von Cesalpina.
   Alkylenoxydaddukte auf Polyolbasis wie Polyglykol^{®}-Produkte von Clariant. Grenzflächenaktive Polyglyceride und deren Derivate von Clariant. 6) Sulfosuccinate, Alkansulfonate, Paraffin- und Olefinsulfonate wie Netzer IS^{®}, Hoe^{®}S1728, Hostapur^{®}OS, Hostapur^{®}SAS von Clariant, Triton^{®}GR7ME und GR5 von Union Carbide, Empimin^{®}-Produkte von Albright und Wilson, Marlon^{®}-PS65 von Condea.
7) Sulfosuccinamate wie die Aerosol^{®}-Produkte von Cytec oder die Empimin^{®}-Produkte von Albright und Wilson.
8) Alkylenoxidaddukte von Fettaminen, quartäre Ammonium-Verbindungen mit 8 bis 22 Kohlenstoffatomen (C₈-C₂₂) wie z.B. die Genamin^{®}C,L,O,T-Produkte von Clariant.
9) Oberflächenaktive, zwitterionische Verbindungen wie Tauride, Betaine und Sulfobetaine in Form von Tegotain^{®}-Produkte von Goldschmidt, Hostapon^{®}T-und Arkopon^{®}T-Produkte von Clariant.
10) Oberflächenaktive Verbindungen auf Silikon- bzw. Silanbasis wie die Tegopren^{®}-Produkte von Goldschmidt und die SE^{®}-Produkte von Wacker, sowie die Bevaloid^{®}-, Rhodorsil^{®}- und Silcolapse^{®}-Produkte von Rhodia (Dow Coming, Reliance, GE, Bayer).
11) Per- oder polyfluorierte oberflächenaktive Verbindungen wie Fluowet^{®}-Produkte von Clariant, die Bayowet^{®}-Produkte von Bayer, die Zonyl^{®}-Produkte von DuPont und Produkte dieser Art von Daikin und Asahi Glass.
12) Grenzflächenaktive Sulfonamide z.B. von Bayer.
13) Grenzflächenaktive Polyacryl- und Polymethacrylderivate wie die Sokalan^{®}-Produkte von der BASF.
14) Oberflächenaktive Polyamide wie modifizierte Gelatine oder derivatisierte Polyasparginsäure von Bayer und deren Derivate.
15) Tensidische Polyvinylverbindungen wie modifiziertes Polyvinylpyrollidon wie die Luviskol^{®}-Produkte von BASF und die Aghmer^{®}-Produkte von ISP oder die derivatisierten Polyvinylacetate wie die Mowilith^{®}-Produkte von Clariant oder die -butyrate wie die Lutonal^{®}-Produkte von der BASF, die Vinnapas^{®}-und die Pioloform^{®}-Produkte von Wacker oder modifizierten Polyvinylalkohole wie die Mowiol^{®}-Produkte von Clariant.
16) Oberflächenaktive Polymere auf Basis von Maleinsäureanhydrid und/oder Umsetzungsprodukten von Maleinsäureanhydrid, sowie Maleinsäureanhydrid und/oder Umsetzungsprodukte von Maleinsäureanhydrid beinhaltende Copolymere wie die Agrimer^{®}-VEMA-Produkte von ISP.
17) Oberfächenaktive Derivate von Montan-, Polyethylen-, und Polypropylenwachsen wie die Hoechst^{®}-wachse oder die Licowet^{®}-Produkte von Clariant.
18) Oberflächenaktive Phosphonate und Phosphinate wie Fluowet^{®}-PL von Clariant.
19) Poly- oder perhalogenierte Tenside wie beispielsweise Emulsogen^{®}-1557 von Clariant.
20) Anionische Verbindungen, die formal die Umsetzungsprodukte der oben genannten Phenole der Komponente (3) mit Schwefelsäure oder Phosphorsäure darstellen und mit geeigneten Basen neutralisiert sind (Salze), beispielsweise der mit NaOH neutralisierte saure Phosphorsäureester des dreifach ethoxylierten Phenols, der mit NaOH neutralisierte saure Phosphorsäureester eines mit 9 mol Ethylenoxid umgesetzten Nonylphenols und der mit Triethanolamin neutralisierte Phosphorsäureester des Reaktionsproduktes von 20 mol Ethylenoxid und 1 mol Tristyrylphenol.
21) Benzolsulfonate wie Alkyl- oder Arylbenzolsulfonate, z.B. saure oder mit geeigneten Basen neutralisierte (Poly)alkyl- und (Poly)aryl-benzolsulfonatsäuren, beispielsweise mit 1 bis 12 C-Atomen pro Alkylrest bzw. mit bis zu 3 Styroleinheiten im Polyarylrest, vorzugsweise (lineare) Dodecylbenzolsulfonsäure oder deren öl-lösliche Salze wie beispielsweise das Calciumsalz oder das Isopropylammoniumsalz der Dodecylbenzolsulfonsäure. Beispiele für derartige Tenside sind das saure (lineare) Dodecylbenzolsulfonat, kommerziell beispielsweise in Form der Marlon^{®}-Produkte (Hüls), oder Calciumdodecylbenzolsulfonat.

Bei den Alkylenoxy-Einheiten sind 1,2-Ethylenoxy-, 1,2-Propylenoxy-, 1,2-Butylenoxy- und 2,3-Butylenoxy-Einheiten, insbesondere 1,2-Ethylenoxy-Einheiten bevorzugt.

Beispiele für Tenside aus der Gruppe der Tenside auf nichtaromatischer Basis sind die Tenside der vorstehend genannten Gruppen 1) bis 19), vorzugsweise der Gruppen 1), 2), 6) und 8).

Beispiele für Tenside aus der Gruppe der Tenside auf Aromatenbasis sind die Tenside der vorstehend genannten Gruppen 20) und 21), vorzugsweise der neutralisierte Phosphorsäureester von mit 1 bis 50 mol, Ethylenoxid umgesetztem Tristyrylphenol, beispielsweise aus der Soprophor^{®}-Reihe (Rhodia) wie Soprophor^{®} FL.

Der Anteil an Tensiden der Komponente (6) beträgt vorzugsweise 0 bis 60 Gew.-%, insbesondere 1 bis 50 Gew.-%, weiter bevorzugt 10 bis 40 Gew.-% Tensid bezogen auf das Gewicht der Formulierung. Die Mengenangaben zu den Tensiden beziehen sich in den Fällen der Komponenten (6) und auch (3) jeweils auf das Gewicht der waschaktiven Substanz (ohne Wassergehalt).

Bevorzugte Suspensionskonzentrate enthalten die Komponenten (1) bis (6) in den Mengen, bei denen einzelne oder mehrere Komponenten in den dafür bevorzugt angegebenen Mengen enthalten sind.

Die Herstellung der erfindungsgemäßen Suspensionskonzentrate erfolgt in bekannter Weise (siehe Winnacker-Küchler, chemische Technologie", Band 7, C. Hanser Verlag München, 4. Aufl. 1986), z.B. durch Nassvermahlung der Komponenten, welches in geeigneten Mühlen, z.B. in Perlmühlen (wie z.B. diskontinuierliche Perlmühlen, z.B. der Fa. Drais oder kontinuierliche Perlmühlen, der z.B. Fa. Bachofen), oder Kolloidmühlen (wie z.B. Zahnkolloidmühlen, z.B. der Fa. Probst + Claasen), stattfinden kann.

In einer bevorzugten Ausführungsform der Erfindung wird solange vermahlen, bis 50 % der Partikel der Formulierung eine Größe von kleiner oder gleich 4 µm aufweisen (d50 ≤ 4 µm).

Vorzugsweise weisen dabei die Wirkstoffe (Komponente 1) in der Formulierung eine Partikelgröße von d50 kleiner oder gleich 4 µm auf, insbesondere weisen 60 % oder ganz besonders 80 % der Wirkstoffpartikel eine Partikelgröße im Bereich von 1 bis 4 µm auf.

Die Erfindung betrifft weiterhin Mittel, erhältlich aus dem erfindungsgemäßen Suspensionskonzentrat durch Verdünnen mit Flüssigkeiten, bevorzugt Wasser.

Es kann vorteilhaft sein, den so erhaltenen Mitteln weitere Wirkstoffe, bevorzugt agrochemische Wirkstoffe (z.B. als Tankmischpartner in Form entsprechender Formulierungen) und/oder zur Anwendung übliche Hilfs- und Zusatzstoffe, z.B. selbstemulgierende Öle wie Pflanzenöle oder Paraffinöle und/oder Düngemittel zuzugeben. Gegenstand der vorliegenden Erfindung sind daher auch solche Mittel, bevorzugt herbizide, auf Basis der erfindungsgemäßen Suspensionskonzentrate. Hierbei umfasst der Begriff "agrochemische Wirkstoffe" alle Substanzen, die in den Bereichen Landwirtschaft, Gartenbau, Forstwirtschaft und Tierhaltung sowie im häuslichen Bereich und in der Vorratswirtschaft zum Einsatz kommen. Zu diesen agrochemischen Wirkstoffen gehören beispielsweise Herbizide, Insektizide, Akarizide, Rodentizide, Fungizide, Bakterizide, Nematizide, Algizide, Molluskizide, Virizide, Safener, gegen Pflanzenschäden Resistenz induzierende Wirkstoffe, als Repellent wirksame Wirkstoffe und wachstumsregulatorisch wirksame Wirkstoffe, Wirkstoffe mit und aus biologischen Organismen, sowie Düngemittel. Besonders bevorzugt sind herbizid, insektizid, akarizid, fungizid, bakterizid, virizid und wachstumsregulatorisch oder als Safener wirksame Wirkstoffe, ganz besonders bevorzugt sind Herbizide, Insektizide, Fungizide und Safener, davon wiederum bevorzugt herbizide Wirkstoffe.

Eine besondere Ausführungsform der Erfindung betrifft die Verwendung der aus den erfindungsgemäßen Suspensionskonzentraten erhältlichen Mittel zur Bekämpfung von unerwünschtem Pflanzenwuchs, im folgenden als "herbizides Mittel" bezeichnet.

Die herbiziden Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfasst. Dabei können die herbiziden Mittel z.B. im Vorsaat-, Vorauflauf oder Nachauflaufverfahren ausgebracht (angewandt) werden. Im einzelnen seien beispielhaft einige Vertreter der mono- und dikotylen Unkrautflora genannt, die durch die herbiziden Mittel kontrolliert werden können, ohne dass durch die Nennung eine Beschränkung auf bestimmte Arten erfolgen soll.

Auf der Seite der monokotylen Unkrautarten werden z.B. Apera spica venti, Avena spp., Alopecurus spp., Brachiaria spp., Digitaria spp., Lolium spp., Echinochloa spp., Panicum spp., Phalaris spp., Poa spp., Setaria spp. sowie Bromus spp. wie Bromus catharticus, Bromus secalinus, Bromus erectus, Bromus tectorum und Bromus japonicus und Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp., Chrysanthemum spp., Galium spp. wie Galium aparine, Ipomoea spp., Kochia spp., Lamium spp., Matricaria spp., Pharbitis spp., Polygonum spp., Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Unter den spezifischen Kulturbedingungen im Reis vorkommende Schadpflanzen wie z.B. Echinochloa, Sagittaria, Alisma, Eleocharis, Scirpus und Cyperus werden von den herbiziden Mitteln ebenfalls hervorragend bekämpft.

Werden die herbiziden Mittel vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der herbiziden Mittel auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise eine für die Kulturpflanzen schädliche Unkrautkonkurrenz sehr früh und nachhaltig beseitigt wird.

Die herbiziden Mittel zeichnen sich durch eine schnell einsetzende und lang andauernde herbizide Wirkung aus. Die Regenfestigkeit der Wirkstoffe in den herbiziden Mitteln ist in der Regel günstig. Als besonderer Vorteil fällt ins Gewicht, dass die in den herbiziden Mitteln verwendeten und wirksamen Dosierungen von herbiziden Verbindungen so gering eingestellt werden können, dass ihre Bodenwirkung optimal niedrig ist. Somit wird deren Einsatz nicht nur in empfindlichen Kulturen erst möglich, sondern Grundwasser-Kontaminationen werden praktisch vermieden. Durch die erfindungsgemäße Kombination von Wirkstoffen wird eine erhebliche Reduzierung der nötigen Aufwandmenge der Wirkstoffe ermöglicht.

Die genannten Eigenschaften und Vorteile sind in der praktischen Unkrautbekämpfung von Nutzen, um landwirtschaftliche Kulturen von unerwünschten Konkurrenzpflanzen freizuhalten und damit die Erträge qualitativ und quantitativ zu sichem und/oder zu erhöhen. Der technische Standard wird durch diese neuen herbiziden Mittel hinsichtlich der beschriebenen Eigenschaften deutlich übertroffen.

Obgleich die herbiziden Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Reis oder Mais, soweit sie über Toleranz oder Resistenz gegenüber den im herbiziden Mittel vorhanden Herbiziden verfügen - erworben auf natürlichem oder transgenem Wege - nicht oder nur unwesentlich geschädigt. Die vorliegenden herbiziden Mittel eignen sich aus diesen Gründen sehr gut zur selektiven Bekämpfung von unerwünschtem Pflanzenwuchs in landwirtschaftlichen Nutzpflanzungen oder in Zierpflanzungen.

Darüber hinaus weisen die entsprechenden herbiziden Mittel je nach Kulturpflanze hervorragende wachstumsregulatorische Eigenschaften auf. Sie greifen regulierend in den pflanzeneigenen Stoffwechsel ein und können damit zur gezielten Beeinflussung von Pflanzeninhaltsstoffen und zur Ernteerleichterung wie z.B. durch Auslösen von Desikkation und Wuchsstauchung eingesetzt werden. Desweiteren eignen sie sich potentiell auch zur generellen Steuerung und Hemmung von unerwünschtem vegetativen Wachstum, ohne dabei die Pflanzen abzutöten. Eine Hemmung des vegetativen Wachstums spielt bei vielen mono- und dikotylen Kulturen eine große Rolle, da das Lagern hierdurch verringert oder völlig verhindert werden kann.

Aufgrund ihrer herbiziden und pflanzenwachstumsregulatorischen Eigenschaften können die herbiziden Mittel - wie bereits erwähnt - auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der herbiziden Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais oder auch Kulturen von Zuckerrübe, Baumwolle, Soja, Raps, Kartoffel, Tomate, Erbse und anderen Gemüsesorten. Vorzugsweise können die herbiziden Mittel in Nutzpflanzenkulturen eingesetzt werden, welche gegenüber den phytotoxischen Wirkungen der Herbizide resistent sind bzw. gentechnisch resistent gemacht worden sind.

Bei der Anwendung der herbiziden Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den weiteren herbiziden Wirkstoffen, gegenüber denen die transgene Kultur resistent ist, sowie Beeinflussung von Wuchs und Ertrag der transgenen Kulturpflanzen.

Gegenstand der vorliegenden Erfindung ist somit auch ein Verfahren zur Bekämpfung von unerwünschtem Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, dass dadurch gekennzeichnet ist, dass man die erfindungsgemäßen herbiziden Mittel auf die Schadpflanzen, Pflanzenteile, Pflanzensamen oder die Fläche auf der die Pflanzen wachsen, z.B. die Anbaufläche appliziert.

Gegenstand der Erfindung ist auch ein Verfahren zur Bekämpfung von unerwünschtem Pflanzenwuchs in Plantagenkulturen, dass dadurch gekennzeichnet ist, dass man die erfindungsgemäßen herbiziden Mittel auf die Schadpflanzen, Pflanzenteile, Pflanzensamen oder die Fläche auf der die Pflanzen wachsen, z.B. die Anbaufläche appliziert.

Die Pflanzenkulturen können auch gentechnisch verändert oder durch Mutationsselektion erhalten sein und sind bevorzugt tolerant gegenüber Acetolactatsynthase (ALS)-Inhibitoren (s. z.B. EP-A-0257993, US-A-5013699) oder Glyphosat-Herbiziden (s. WO 92/00377) oder Glufosinate-Herbiziden (s. EP-A-0242236, EP-A-242246).

Mit den erfindungsgemäßen Suspensionskonzentraten kann bei gleicher Aufwandmenge eine bessere biologische Wirkung erzielt werden.

Daneben haben die erfindungsgemäßen Suspensionskonzentrate, als spezielle Wirkstoff-Kombinations-Formulierungen (synonym: Mischungs-Formulierungen, Co-Formulierungen) weitere Vorteile, wie z.B. ein geringerer Verpackungsaufwand als bei Verwendung der Einzelwirkstoffe, wodurch sich der Aufwand für Herstellung, Transport und Lagerung vereinfacht und die Zubereitung der in der Landwirtschaft eingesetzten Spritzbrühen durch die kleineren Mengen und die bereits eingestellten, wirksamen Mengenverhältnisse besser gehandhabt werden können, wie z.B. beim Mess- und Verrührvorgang.

Die erfindungsgemäßen Suspensionskonzentrate, zeigen zusätzlich überraschenderweise hervorragende dispergierende und stabilisierende Eigenschaften nach dem weiteren Verdünnen mit Flüssigkeiten, bevorzugt Wasser.

Daneben ergeben die erfindungsgemäßen Suspensionskonzentrate über lange Zeit lagerstabile und anwendungstechnisch einwandfreie Formulierungen.

Die Erfindung wird durch die Beispiele näher erläutert, ohne sie dadurch einzuschränken.

### Beispiele

### 1. Herstellung:

Wasser wird in einem Kessel vorgelegt und über eine Kolloidmühle im Kreislauf umgepumpt. Es werden Verdicker (z.B. Bentone^{®}; Rhodopo^{®}) und gegebenenfalls Formulierungshilfsmittel, wie beispielsweise Entschäumer (z.B. Rhodorsi^{®}) und/oder Frostschutzmittel (z.B. Propylenglykol), zugegeben, gefolgt von den Tensiden (z.B. Soprophor^{®}, Genapol^{®}, Geronol^{®}, Geropon^{®}, Galoryl^{®}, Supragil^{®}, Darvan^{®}, Atplus^{®}). Als letzte Komponenten werden die Wirkstoffe zugefügt. Danach wird die gesamte Mischung über die Kolloidmühle in einen weiteren Kessel überführt. Diese Mischung wird dann durch Nassvermahlung mittels Perlmühlen vermahlen.

### 2. Zusammensetzungen:

**Tabelle I - Formulierungsbeispiele Nr. 1 -10**

| Beispiel-Nr./ Komponente: | | 1 | 2 | 3 | 4 | 5 | 6 | 7 | 8 | 9 | 10 |
|---|---|---|---|---|---|---|---|---|---|---|---|
| 1 | Wirkstoff A*) | 2,72 | 1,3 | 2,12 | 1,3 | 0,7 | 2,27 | 3,35 | 2,3 | 2,3 | 4,54 |
| 2 | Wirkstoff V.2 | | | | | | 13,7 | 20,1 | 14 | 11,9 | 26,75 |
| 2 | Wirkstoff VI.2 | 18,78 | 19,57 | 18,5 | 19,55 | 22,87 | | | | | |
| - | Zusätzlicher Wirkstoff **) | | | | | | | | | | 3 |
| 3 | Soprophor^{®} 3D33 | 0,065 | 0,032 | 0,06 | 0,014 | 0,01 | 0,055 | 0,08 | 0,055 | 0,056 | 0,12 |
| 3 | Soprophor^{®} CY/8 | 0,03 | 0,015 | 0,03 | 0,015 | 0,01 | 0,025 | 0,04 | 0,027 | 0,026 | 0,065 |
| 3 | Soprophor^{®} BSU | 0,12 | 0,06 | 0,12 | 0,06 | 0,03 | 0,105 | 0,16 | 0,11 | 0,1 | 0,15 |
| 4 | Rhodopor^{®} 50 MC | | | | | | 0,005 | 0,006 | 0,005 | 0,005 | 0,008 |
| 4 | Bentone^{®} EW | 0,05 | 0,06 | 0,05 | 0,05 | 0,07 | | | | | |
| 5 | Propylen-glykol | 2 | 2 | 3 | 2 | 4 | 8 | 12 | 8 | 9 | 9 |
| 5 | Rhodorsil^{®} Silcolapse 5020 | 1 | 1 | 1 | 1 | 0,8 | 0,5 | 0,5 | 0,5 | 0,5 | 0,5 |
| 6 | Genapol^{®} LRO***) | | | | | | 50 | 40 | 50 | 47 | 43 |
| 6 | Geronol^{®} CF/AR****) | 25 | 23 | 20 | 25 | 22 | | | | | |
| 6 | Galoryl^{®} MT 804 | 2 | 2 | 3 | 2 | 3 | 2 | 2 | 2 | 2,5 | 2,3 |
| | Wasser | ad 100 | ad 100 | ad 100 | ad 100 | ad 100 | ad 100 | ad 100 | ad 100 | ad 100 | ad 100 |

| | | | | | | | | | | | |
|---|---|---|---|---|---|---|---|---|---|---|---|
| Alle Angaben in Gew.%; *) Wirkstoff A (Komponente 1): Verbindung aus Tabelle A (A-1 bis A-140), **) Zusätzlicher Wirkstoff: Mecoprop (als K-Salz; siehe Nummer 503 in "The Pesticide Manual", 13th Edition, British Crop Protection Council, 2005), ***) Genapol® LRO = 70 %ige wässrige Paste von (C₁₂-C₁₄)Fettalkoholdiethylenglykolethersulfat-natrium, ****) Geronol^{®} CF/AR = 70 %ige wässrige Lösung von Fettalkoholethoxylatphosphat-ammonium | | | | | | | | | | | |

**Tabelle II - Formulierungsbeispiele Nr. 11 - 20**

| Beispiel-Nr./ Komponente: | | 11 | 12 | 13 | 14 | 15 | 16 | 17 | 18 | 19 | 20 |
|---|---|---|---|---|---|---|---|---|---|---|---|
| 1 | Wirkstoff A*) | 2,72 | 1,3 | 2,12 | 1,3 | 0,7 | 2,27 | 3,35 | 2,3 | 2,3 | 4,54 |
| 2 | Wirkstoff V.2 | | | | | | 13,7 | 20,1 | 14 | 11,9 | 26,75 |
| 2 | Wirkstoff VI.2 | 18,76 | 19,57 | 18,5 | 19,55 | 22,87 | | | | | |
| 3 | Soprophor^{®} 3D33 | 0,065 | 0,032 | 0,06 | 0,014 | 0,01 | 0,055 | 0,08 | 0,055 | 0,056 | 0,12 |
| 3 | Soprophor^{®} CY/8 | 0,03 | 0,015 | 0,03 | 0,015 | 0,01 | 0,025 | 0,04 | 0,027 | 0,026 | 0,065 |
| 3 | Soprophor^{®} BSU | 0,12 | 0,06 | 0,12 | 0,06 | 0,03 | 0,105 | 0,16 | 0,11 | 0,1 | 0,15 |
| 4 | Bentone^{®} EW | 0,05 | 0,06 | 0,05 | 0,05 | 0,07 | | | | | |
| 4 | Rhodopol^{®} 50 MC | | | | | | 0,005 | 0,005 | 0,005 | 0,005 | 0,008 |
| 5 | Propylenglykol | 2 | 2 | 3 | 2 | 4 | 8 | 12 | 8 | 9 | 3 |
| 5 | Rhodorsil^{®} Silcolapse 5020 | 1 | 1 | 1 | 1 | 0,8 | 0,5 | 0,5 | 0,5 | 0,5 | 0,5 |
| 6 | Genapol^{®} LRO ***) | | | | | | 50 | 40 | 50 | 47 | 43 |
| 6 | Genapol^{®} X 150 | | | | | | 2 | | | | |
| 6 | Geronol^{®} CF/AR ****) | 25 | 23 | 20 | 25 | 22 | | | | | |
| 6 | Geropon^{®} T 36 | 2 | | | | | | | | | 2,3 |
| 6 | Supragil^{®} MNS 90 | | 2 | | | | | | | 2,5 | |
| 6 | Supragil^{®} WP | | | 3 | | | | | 2 | | |
| 6 | Darvan^{®} No 3 | | | | 2 | | | | | | |
| 6 | Atplus^{®} 435 | | | | | 4 | | 2 | | | |
| | Wasser | ad 100 | ad 100 | ad 100 | ad 100 | ad 100 | ad 100 | ad 100 | ad 100 | ad 100 | ad 100 |

| | | | | | | | | | | | |
|---|---|---|---|---|---|---|---|---|---|---|---|
| Alle Angaben in Gew.%; Erläuterung zu *), ***), ****) siehe Tabelle I | | | | | | | | | | | |

### 3. Versuch zur Lagerstabilität

Die Testformulierungen wurden bei 40°C für 8 Wochen gelagert und danach auf ihre Konsistenz geprüft. Die Formulierungen waren über den Zeitraum stabil.

### 4. Biologische Vergleichsversuche

Die erfindungsgemäßen Suspensionskonzentrate bewirken eine deutlich verbesserte biologische Wirkung bei gleicher Anwendungsdosierung im Vergleich zu Standard-Formulierungen des Standes der Technik, wie Spritzpulver (WP), wasserlösliche Pulver (SP), Kapselsuspensionen (CS), Stäubemittel (DP), Granulate für die Streu- und Bodenapplikation, Granulate (GR) in Form von Mikro , Sprüh , Aufzugs- und Adsorptionsgranulaten.

Daneben ist feststellbar, dass eine durchschnittlich geringere Partikelgröße von kleiner 4 µm zu einer weiteren Wirkungssteigerung bei den erfindungsgemäßen Suspensionskonzentraten führt.

## Patentansprüche

1. Wässriges Suspensionskonzentrat, enthaltend
(1) einen oder mehrere Wirkstoffe aus der Gruppe herbizidwirksamer 2,4-Diamino-s-triazine, welche an einer Aminogruppe mit einer (Hetero)aryl(hetero)alkylgruppe N-substituiert sind.
(2) einen oder mehrere Wirkstoffe aus der Gruppe herbizidwirksamer phosphatgruppenhaltiger Derivate der Aminosäuren Glycin/Homoalanin,
(3) ein oder mehrere Tenside auf Basis nicht salzartiger substituierter Phenolether,
(4) einen oder mehrere Verdicker.

2. Suspensionskonzentrat gemäß Anspruch 1, zusätzlich enthaltend weitere Formulierungshilfsmittel (Komponente 5).

3. Suspensionskonzentrat gemäß Anspruch 1 oder 2, zusätzlich enthaltend von Komponente (3) verschiedene Tenside (Komponente 6).

4. Suspensionskonzentrat gemäß einem der Ansprüche 1 bis 3, **dadurch gekennzeichnet, dass** es einen oder mehrere Verdicker auf Aluminiumsilikatbasis enthält.

5. Verfahren zur Herstellung eines Suspensionskonzentrates gemäß einem oder mehreren der Ansprüche 1 bis 4, wobei die Komponenten nass vermahlen werden.

6. Mittel, erhältlich aus einem Suspensionskonzentrat gemäß einem oder mehreren der Ansprüche 1 bis 4 durch Verdünnen mit Flüssigkeiten, bevorzugt Wasser.

7. Verwendung eines Suspensionskonzentrates gemäß einem oder mehreren der Ansprüche 1 bis 4 oder einem Mittel gemäß Anspruch 6 zur Bekämpfung unerwünschten Pflanzenwuchses.

8. Verfahren zur Bekämpfung von unerwünschtem Pflanzenwuchs, **dadurch gekennzeichnet, dass** ein Suspensionskonzentrat gemäß einem oder mehreren der Ansprüche 1 bis 4 oder einem Mittel gemäß Anspruch 6 auf die Schadpflanzen, Pflanzenteile, Pflanzensamen oder die Fläche auf der die Pflanzen wachsen, appliziert wird.

## Claims

1. An aqueous suspension concentrate which comprises
(1) one or more active substances from the group consisting of herbicidally effective 2,4-diamino-s-triazines which are N-substituted on an amino group with a (hetero)aryl(hetero)alkyl group,
(2) one or more active substances from the group consisting of herbicidally effective derivatives, comprising phosphate groups, of the amino acids glycine/homoalanine,
(3) one or more surfactants based on non-salt-like substituted phenol ethers,
(4) one or more thickeners.

2. The suspension concentrate as claimed in claim 1, which additionally comprises additional formulation auxiliaries (component 5).

3. The suspension concentrate as claimed in claim 1 or 2, which additionally comprises surfactants other than component (3) (component 6).

4. The suspension concentrate as claimed in one of claims 1 to 3, which comprises one or more thickeners based on aluminum silicate.

5. A process for the preparation of a suspension concentrate as claimed in one or more of claims 1 to 4, which comprises the wet milling of the components.

6. A composition which can be obtained from a suspension concentrate as claimed in one or more of claims 1 to 4 by diluting with liquids, preferably water.

7. The use of a suspension concentrate as claimed in one or more of claims 1 to 4 or a composition as claimed in claim 6 for combating undesirable plant growth.

8. A process for combating undesirable plant growth, which comprises the application of a suspension concentrate as claimed in one or more of claims 1 to 4 or a composition as claimed in claim 6 to the harmful plants, plant parts, plant seeds or the area on which the plants are growing.

## Revendications

1. Concentré de suspension aqueux contenant
(1) un ou plusieurs principes actifs du groupe des 2,4-diamino-s-triazine efficaces du point de vue herbicide, qui sont N-substituées sur un groupe amino avec un groupe (hétéro)aryl(hétéro)alkyle,
(2) un ou plusieurs principes actifs du groupe des dérivés contenant un ou des groupes phosphate des aminoacides glycine/homoalanine efficaces du point de vue herbicide,
(3) un ou plusieurs tensioactifs à base de phénoléthers substitués qui ne sont pas de type sel,
(4) un ou plusieurs épaississants.

2. Concentré de suspension selon la revendication 1, contenant en outre d'autres adjuvants de formulation (composant 5).

3. Concentré de suspension selon la revendication 1 ou 2, contenant en outre des tensioactifs différents du composant (3) (composant 6).

4. Concentré de suspension selon l'une des revendications 1 à 3, **caractérisé en ce qu'**il contient un ou plusieurs épaississants à base de silicate d'aluminium.

5. Procédé de production d'un concentré de suspension selon une ou plusieurs des revendications 1 à 4, où les composants sont broyés à l'état humide.

6. Agent pouvant être obtenu à partir d'un concentré de suspension selon une ou plusieurs des revendications 1 à 4 par dilution avec des liquides, de préférence l'eau.

7. Utilisation d'un concentré de suspension selon une ou plusieurs des revendications 1 à 4 ou d'un agent selon la revendication 6 pour la lutte contre la croissance de plantes indésirables.

8. Procédé pour la lutte contre la croissance de plantes indésirables, **caractérisé en ce qu'**un concentré de suspension selon une ou plusieurs des revendications 1 à 4 ou un agent selon la revendication 6 est appliqué sur les plantes nuisibles, des parties des plantes, des graines des plantes ou sur la surface sur laquelle les plantes poussent.
